(19) Europäisches Patentamt
European Patent Office
Office européen des brevets

(11) **EP 0 999 889 B1**

(12) **EUROPÄISCHE PATENTSCHRIFT**

(45) Veröffentlichungstag und Bekanntmachung des Hinweises auf die Patenterteilung:
**17.09.2008 Patentblatt 2008/38**

(21) Anmeldenummer: **98942566.5**

(22) Anmeldetag: **16.07.1998**

(51) Int Cl.:
***B01D 67/00*** (2006.01)  ***B01D 69/08*** (2006.01)
***B01D 71/26*** (2006.01)  ***B01D 69/02*** (2006.01)

(86) Internationale Anmeldenummer:
**PCT/EP1998/004451**

(87) Internationale Veröffentlichungsnummer:
**WO 1999/004891 (04.02.1999 Gazette 1999/05)**

(54) **INTEGRAL ASYMMETRISCHE POLYOLEFINMEMBRAN ZUM GASAUSTAUSCH**

INTEGRALLY ASYMMETRICAL POLYOLEFIN MEMBRANE FOR GAS TRANSFER

MEMBRANE EN POLYOLEFINE INTEGRALEMENT ASYMETRIQUE POUR ECHANGE GAZEUX

(84) Benannte Vertragsstaaten:
**AT BE DE DK ES FR GB IT NL SE**

(30) Priorität: **23.07.1997 DE 19731677**

(43) Veröffentlichungstag der Anmeldung:
**17.05.2000 Patentblatt 2000/20**

(73) Patentinhaber: **Membrana GmbH
42289 Wuppertal-Barmen (DE)**

(72) Erfinder:
• **MÜLLER, Marcus, Oskar
NL-6831 KH Arnhem (NL)**
• **KESSLER, Erich
D-64739 Höchst (DE)**
• **HORNSCHEIDT, Ralf, Rainer
D-42555 Velbert (DE)**

• **WIESE, Frank
D-42289 Wuppertal (DE)**
• **LANG, Armin, Johannes
D-63897 Miltenberg (DE)**

(74) Vertreter: **Schröder, Richard et al
CPW GmbH
Postfach 10 01 49
42097 Wuppertal (DE)**

(56) Entgegenhaltungen:
**EP-A- 0 299 381        DE-A- 2 737 745
DE-A- 3 205 289        DE-A- 4 226 205**

• **DATABASE WPI Week 8313 Derwent Publications Ltd., London, GB; AN 83-31173k XP002084252 & JP 58 029839 A (MITSUBISHI PLASTICS IND LTD), 22. Februar 1983**

**Beschreibung**

Die Erfindung betrifft eine integral asymmetrische, hydrophobe Membran zum Gasaustausch insbesondere zur Blutoxygenation, die hauptsächlich aus mindestens einem Polymer, ausgewählt aus der Gruppe der Polyolefine, zusammengesetzt ist und eine erste und eine zweite Oberfläche aufweist, wobei die Membran zwischen der ersten und der zweiten Oberfläche eine Stützschicht mit einer schwammartigen, offenporigen mikroporösen Struktur und zu dieser Stützschicht benachbart an der ersten und/oder der zweiten Oberfläche eine Trennschicht mit dichterer Struktur aufweist.

In einer Vielzahl von Anwendungen aus den Bereichen der Chemie, Biochemie oder der Medizin stellt sich das Problem, gasförmige Komponenten aus Flüssigkeiten abzutrennen oder solche Komponenten den Flüssigkeiten hinzuzufügen. Für derartige Gasaustauschprozesse werden in zunehmendem Maße Membranen eingesetzt, die als Trennmembran zwischen der jeweiligen Flüssigkeit, von der eine gasförmige Komponente abgetrennt bzw. zu der eine gasförmige Komponente hinzugefügt werden soll, und einem diese gasförmige Komponente aufnehmenden oder abgebenden Fluid dient. Hierbei kann das Fluid sowohl ein Gas sein oder auch eine Flüssigkeit, die die auszutauschende Gaskomponente enthält bzw. aufnehmen kann. Mittels derartiger Membranen kann eine große Austauschfläche für den Gasaustausch bereitgestellt werden und - wenn dies erforderlich ist - ein direkter Kontakt zwischen Flüssigkeit und Fluid vermieden werden.

Eine wichtige Anwendung membranbasierter Gasaustauschprozesse im medizinischen Bereich sind Oxygenatoren, auch künstliche Lungen genannt. Bei diesen Oxygenatoren, die z.B. bei Operationen am offenen Herzen eingesetzt werden, erfolgt eine Oxygenation von Blut und eine Entfernung von Kohlendioxid aus dem Blut. In der Regel werden bei derartigen Oxygenatoren Bündel aus Hohlfasermembranen eingesetzt. Venöses Blut strömt dabei im Außenraum um die Hohlfasermembranen, während durch das Lumen der Hohlfasermembranen Luft, mit Sauerstoff angereicherte Luft oder auch reiner Sauerstoff geführt wird. Über die Membranen besteht ein Kontakt zwischen Blut und Gas, wodurch ein Transport von Sauerstoff in das Blut und gleichzeitig ein Transport von Kohlendioxid aus dem Blut in das Gas erfolgen kann.

Um das Blut ausreichend mit Sauerstoff zu versorgen und gleichzeitig Kohlendioxid in ausreichendem Maße aus dem Blut entfernen zu können, müssen die Membranen einen hohen Gastransport gewährleisten: Es muß eine ausreichende Menge Sauerstoff von der Gasseite der Membran zur Blutseite und umgekehrt eine ausreichende Menge Kohlendioxid von der Blutseite der Membran zur Gasseite transferiert werden, d.h. die Transferraten, ausgedrückt als das Volumen eines Gases, das pro Zeiteinheit und Membranfläche von einer Membranseite auf die andere transportiert wird, müssen groß sein. Einen entscheidenden Einfluß auf die Transferraten besitzt die Porosität der Membran, da nur bei ausreichend hoher Porosität ausreichende Transferraten erzielt werden können.

Es befinden sich eine Reihe von Oxygenatoren im Einsatz, die Hohlfasermembranen mit offenporiger mikroporöser Struktur enthalten. Eine Möglichkeit, derartige Membranen für den Gasaustausch d.h. z.B. für die Oxygenation herzustellen, wird in der DE-A-28 33 493 beschrieben. Mit dem Verfahren gemäß dieser Schrift lassen sich Membranen aus schmelzflüssigen thermoplastischen Polymeren mit bis zu 90 Vol.-% miteinander in Verbindung stehenden Poren herstellen. Das Verfahren basiert auf einem thermisch induzierten Phasenseparationsprozeß mit flüssig-flüssig-Phasenseparation. Bei diesem Prozeß wird zunächst eine homogene einphasige Schmelzemischung aus dem thermoplastischen Polymer und einer kompatiblen Komponente, die mit dem Polymer ein binäres System ausbildet, das im flüssigen Aggregatzustand einen Bereich völliger Mischbarkeit und einen Bereich mit Mischungslücke aufweist, ausgebildet und diese Schmelzemischung dann in ein Bad extrudiert, das gegenüber dem Polymer im wesentlichen inert ist und eine Temperatur unterhalb der Entmischungstemperatur besitzt. Hierdurch wird eine flüssig-flüssig Phasentrennung eingeleitet und das thermoplastische Polymer zu der Membranstruktur verfestigt.

Ein verbessertes Verfahren zur Herstellung derartiger Membranen, das eine gezielte Einstellung von Porenvolumen, Porengröße und Porenwandung erlaubt, wird in der DE-A-32 05 289 offenbart. Bei diesem Verfahren werden 5-90 Gew.-% eines Polymeren durch Erwärmen über die kritische Entmischungstemperatur $T_c$ in 10-95 Gew.-% eines Gemischs zweier bei der Lösetemperatur flüssiger und mischbarer Verbindungen A und B gelöst, wobei das eingesetzte Gemisch Polymer, Verbindungen A und B im flüssigen Aggregatzustand eine Mischungslücke aufweist, die Verbindung A ein Lösemittel für das Polymer ist und die Verbindung B die Phasentrennungstemperatur einer Lösung, bestehend aus dem Polymer und der Verbindung A, heraufsetzt. Die Lösung wird ausgeformt, durch Abkühlung zur Entmischung und Erstarrung gebracht, und anschließend werden die Verbindungen A und B extrahiert.

Die gemäß DE-A-28 33 493 oder DE-A-32 05 289 offenbarten Membranen weisen eine offenporige mikroporöse Struktur und auch offenporige mikroporöse Oberflächen auf. Dies hat zwar auf der einen Seite zur Folge, daß gasförmige Stoffe, also beispielsweise Sauerstoff oder Kohlendioxid, relativ ungehindert durch die Membran hindurchtreten können und der Transport eines Gases als Knudsen Fluß oder Knudsen Diffusion erfolgt, verbunden mit relativ hohen Transferraten für Gase. Auf der anderen Seite jedoch kann bei längerem Einsatz dieser Membranen bei der Blutoxygenation oder allgemein bei Gasaustauschprozessen mit wässrigen Flüssigkeiten, auch wenn in diesen Fällen die Membranen aus hydrophoben Polymeren und insbesondere aus Polyolefinen hergestellt sind, Blutplasma bzw. ein Teil der Flüssigkeit in die Membran eindringen und im Extremfall auf der Gasseite der Membran austreten. Dies hat einen drastischen Abfall der Gastransferraten zur Folge. Bei Anwendungen im medizinischen Bereich der Blutoxygenation wird dies als Plasmadurchbruch bezeichnet.

Die Plasmadurchbruchzeit derartiger Membranen, wie sie gemäß DE-A-28 33 493 oder DE-A-32 05 289 herstellbar sind, reicht zwar in den meisten Fällen der konventionellen Blutoxygenation aus, um einen Patienten bei einer normalen Operation am offenen Herzen zu oxygenieren. Jedoch besteht der Wunsch nach Membranen mit höherer Plasmadurchbruchzeit, um höhere Sicherheiten bei länger andauernden Herzoperationen zu erlangen und einen Plasmadurchbruch auszuschließen, der einen sofortigen Austausch des Oxygenators erforderlich machen würde. Ein in diesem Zusammenhang häufig geforderter Mindestwert für die Plasmadurchbruchzeit liegt bei 20 Stunden. Ziel ist aber auch, beispielsweise Frühgeburten oder allgemein Patienten mit temporär eingeschränkter Lungenfunktion solange oxygenieren zu können, bis die Lungenfunktion wiederhergestellt ist, d.h. also Langzeitoxygenationen durchführen zu können. Hierfür sind entsprechend lange Plasmadurchbruchzeiten Voraussetzung.

Aus der EP-A-299 381 sind Hohlfasermembranen zur Oxygenation bekannt, die Plasmadurchbruchzeiten von länger als 20 Stunden aufweisen, d.h. auch bei langandauerndem Einsatz keinen Plasmadurchbruch zeigen. Dies wird bei der ansonsten porösen Membran mit zellulärer Struktur durch eine Sperrschicht erreicht, die eine aus dem Sauerstoffluß und dem Stickstoffluß errechnete mittlere Dicke von nicht mehr als 2 μm aufweist und im wesentlichen für Ethanol undurchlässig ist. Die Membran ist im wesentlichen frei von offenen Poren, d.h. von Poren, die sowohl zur Außenseite als auch zur Innenseite der Hohlfasermembran geöffnet sind. Die Membranen gemäß EP-A-299 381 weisen eine Porosität von maximal 50 Vol.-% auf, da bei höheren Porositäten die Poren miteinander verbunden sind und eine Kommunikation zwischen den Seiten der Hohlfasermembranen erfolgt, was einen Plasmadurchbruch zur Folge hat. In der Sperrschicht erfolgt der Transport der auszutauschenden Gase über Lösungsdiffusion.

Die Herstellung dieser Membranen erfolgt über ein Schmelz-Streckverfahren, d.h. das Polymer wird zunächst zu einer Hohlfaser schmelzextrudiert und anschließend warm- und kaltverstreckt. Hierbei werden nur relativ niedrige Porositäten erhalten, wodurch in Verbindung mit dem in der Sperrschicht auftretenden Transport über Lösungsdiffusion auch die erzielbaren Transferraten für Sauerstoff und Kohlendioxid relativ gering bleiben. Darüber hinaus weisen die Hohlfasermembranen gemäß EP-A-299 381 aufgrund der mit der Herstellung verbundenen starken Verstreckung zwar eine ausreichende Festigkeit, jedoch nur eine geringe Bruchdehnung auf. In nachfolgenden textilen Verarbeitungsschritten z.B. zur Herstellung von Bündeln aus Hohlfasermatten, die sich für die Herstellung von Oxygenatoren mit guter Austauschleistung bestens bewährt haben und wie sie beispielsweise in der EP-A-285 812 beschrieben werden, lassen sich daher diese Hohlfasermembranen nur schlecht verarbeiten.

Typischerweise entstehen bei Schmelz-Streckverfahren Membranen mit schlitzförmigen Poren mit ausgeprägter Anisotropie, deren eine Haupterstreckung senkrecht zur Streckrichtung und deren zweite Haupterstreckung senkrecht zur Membranoberfläche liegt, d.h. bei Hohlfasermembranen zwischen Membranaußenoberfläche und Membraninnenoberfläche verläuft, wobei die durch die Poren ausgebildeten Kanäle zwischen den Oberflächen relativ geradlinig verlaufen. Im Falle, daß z.B. infolge mechanischer Beschädigungen beim Spinnprozeß Leckstellen in der Sperrschicht auftreten, existiert dann eine bevorzugte Richtung für den Fluß einer Flüssigkeit zwischen Innen- und Außenoberfläche oder umgekehrt, so daß dadurch ein Plasmadurchbruch begünstigt wird.

Es ist daher Aufgabe der Erfindung, Membranen für den Gasaustausch zur Verfügung zu stellen, bei denen die Nachteile der Membranen des Stands der Technik zumindest reduziert sind, die eine hohe Gasaustauschleistung aufweisen, zumindest über lange Zeiträume dicht sind gegen einen Durchbruch von hydrophilen Flüssigkeiten, insbesondere von Blutplasma, und die gute Weiterverarbeitungseigenschaften aufweisen.

Die Aufgabe wird durch eine integral asymmetrische Membran gemäß Oberbegriff des Anspruchs 1 gelöst, die dadurch gekennzeichnet ist, daß die Trennschicht höchstens Poren mit einem mittleren Durchmesser <100 nm aufweist, daß die Stützschicht frei von Makrovoids ist und die Poren in der Stützschicht im Mittel im wesentlichen isotrop sind und daß die Membran eine Porosität im Bereich von größer als 50 Vol.-% bis kleiner als 75 Vol.-% besitzt.

Hierbei wird im Sinne der vorliegenden Erfindung unter einer integral asymmetrischen Membran eine Membran verstanden, bei der Trennschicht und Stützschicht aus dem gleichen Material bestehen, beide Schichten als integrale Einheit miteinander verbunden sind und zusammen unmittelbar bei der Membranherstellung ausgebildet wurden. Beim Übergang von der Trennschicht zur Stützschicht erfolgt allein eine Änderung in Bezug auf die Membranstruktur. Einen Gegensatz dazu bilden beispielsweise Composit-Membranen, die einen mehrschichtigen Aufbau aufweisen, indem auf einer porösen, oftmals mikroporösen Stützschicht oder Stützmembran in einem separaten Verfahrensschritt eine dichte Schicht als Trennschicht aufgebracht ist. Dies hat zur Folge, daß die die Stützschicht und Trennschicht aufbauenden Materialien bei Composit-Membranen auch unterschiedliche Eigenschaften aufweisen.

Unter dem mittleren Durchmesser der Poren in der Trennschicht wird der Mittelwert aus den Durchmessern der Poren in der Oberfläche verstanden, die als Trennschicht ausgebildet ist, wobei eine rasterelektronenmikroskopische Aufnahme bei 60000-facher Vergrößerung zugrundegelegt wird.

Die erfindungsgemäßen Membranen lassen sich durch ein Verfahren herstellen, welches mindestens die Schritte umfaßt:

a) Lösen von 20-90 Gew.-% mindestens eines Polymers, ausgewählt aus der Gruppe der Polyolefine, durch Erwärmen über die kritische Entmischungstemperatur in 80-10 Gew.-% eines Gemischs zweier das Lösemittelsystem ausbildenden und bei der Lösetemperatur flüssigen und mischbaren Verbindungen A und B, wobei das eingesetzte Gemisch Polymer, Verbindungen A und B im flüssigen Aggregatzustand eine Mischungslücke aufweist, die Verbindung A ein Lösemittel für das mindestens eine Polymer ist und die Verbindung B die Phasentrennungstemperatur einer Lösung, bestehend aus dem mindestens einen Polymer und der Verbindung A, heraufsetzt,

b) Ausformen der Lösung zu einem Formkörper mit einer ersten Oberfläche und einer zweiten Oberfläche in einer Düse, die eine Düsentemperatur oberhalb der kritischen Entmischungstemperatur aufweist,

c) Abkühlung des Formkörpers mit einer solchen Geschwindigkeit, daß eine thermodynamische Nichtgleichgewichts-flüssig-flüssig-Phasentrennung eingeleitet wird und anschließend Erstarrung erfolgt,

d) Entfernen der Verbindungen A und B aus dem Formkörper, um so aus dem Formkörper die Membran zu erhalten,

dadurch gekennzeichnet, daß die Verbindungen A und B so ausgewählt werden, daß die Siedetemperatur der Verbindung A mindestens um 50°C höher ist als diejenige der Verbindung B und das aus der Verbindung A und der Verbindung B bestehende Lösemittelsystem bei Raumtemperatur eine Viskosität von weniger als 60 mPa s aufweist und daß der Formkörper nach Austritt aus der Düse und vor seiner Abkühlung zumindest mit einer seiner Oberflächen einer die Verdampfung der Verbindung B fördernden Atmosphäre ausgesetzt wird.

Überraschenderweise hat sich gezeigt, daß bei Einhaltung dieser Verfahrensbedingungen Membranen erhalten werden, bei denen mindestens eine Oberfläche als Trennschicht ausgebildet ist, die eine dichte oder höchstens nanoporöse Struktur aufweist und die die schwammartige, offenporige mikroporöse Struktur abdeckt, die als Stützschicht dient. Hierbei zeichnet die Trennschicht dafür verantwortlich, daß die nach dem diesem Verfahren hergestellten Membranen über lange Zeiträume dicht gegenüber dem Durchbruch insbesondere von Blutplasma sind. Die Stützschicht weist dabei eine hohe Volumenporosität auf, wodurch für diese Membranen gleichzeitig hohe Gastransferleistungen resultieren.

Als Verbindung A sind solche Verbindungen einzusetzen, in der das mindestens eine Polymer bei Erwärmen bis höchstens zum Siedepunkt dieser Verbindung zu einer homogenen Lösung vollständig gelöst wird. Daher wird die Verbindung A auch als Löser bezeichnet. Zur Ermittlung des Lösevermögens einer Verbindung A ist es zweckmäßig, das Lösevermögen mit bis zu 10 Gew.-% Polymer zu untersuchen, da bei höheren Konzentrationen wegen der auftretenden hohen Viskositäten eine zuverlässige Beurteilung nicht möglich ist.

In einer besonders bevorzugten Ausführungsform des zur Herstellung der erfindungsgemäßen Membranen geeigneten Verfahrens bilden das mindestens eine Polymer und die Verbindung A ein binäres System, das im flüssigen Aggregatzustand einen Bereich besitzt, in dem das System als homogene Lösung vorliegt, und einen Bereich, in dem es eine Mischungslücke aufweist.

Als Verbindung B kann eine solche Verbindung eingesetzt werden, die das mindestens eine Polymer zwar löst, dessen Lösetemperatur in bezug auf das mindestens eine Polymer jedoch mindestens 50°C, vorzugsweise 100°C höher liegt als die Lösetemperatur der Verbindung A in bezug auf das mindestens eine Polymer. Vorzugsweise wird als Verbindung B jedoch ein Nichtlöser für das mindestens eine Polymer verwendet. Unter Nichtlöser für das mindestens eine Polymer wird dabei eine Verbindung B verstanden, welche das mindestens eine Polymer beim Erwärmen bis höchstens zum Siedepunkt der Verbindung B nicht zu einer homogenen Lösung auflöst. Besonders bevorzugt handelt es sich dabei um Verbindungen, in welchen unter den angegebenen Bedingungen das Polymer völlig unlöslich ist oder nur angequollen wird. Als Quellmittel wird die Verbindung B zwar vom Polymer merklich aufgenommen, jedoch ohne daß es dabei zur Bildung einer einzigen Phase kommt. Als Nichtlöser hingegen wird sie vom Polymer auch bei höheren Temperaturen nicht oder nur in geringem Maße aufgenommen.

Wie ausgeführt, bilden das mindestens eine Polymer und die Verbindung A bevorzugt ein binäres System, das im flüssigen Aggregatzustand einen Bereich, in dem das System als homogene Lösung vorliegt, und einen Bereich besitzt, in dem es eine Mischungslücke aufweist. Wird ein solches System aus dem Bereich, in dem es als homogene Lösung vorliegt, abgekühlt, so tritt zunächst eine Entmischung flüssig-flüssig auf, wobei im Gleichgewichtszustand zwei flüssige Phasen, nämlich eine polymerreiche und eine polymerarme Phase nebeneinander liegen. Bei weiterer Abkühlung erstarrt die dabei entstandene polymerreiche Phase. Die Abkühlgeschwindigkeit hat dabei einen Einfluß auf die entstehende Porenstruktur. Ist die Abkühlgeschwindigkeit genügend groß, daß die flüssig-flüssig-Phasentrennung nicht unter thermodynamischen Gleichgewichtsbedingungen erfolgen kann, jedoch dennoch relativ langsam, erfolgt die flüssig-flüssig-Phasentrennung etwa gleichzeitig mit der Ausbildung einer Vielzahl von Flüssigkeitströpfchen von im wesentlichen gleicher Größe. Das resultierende Polymergebilde weist eine zellförmige Mikrostruktur auf. Ist die Abkühlgeschwindigkeit deutlich höher, so wird das Polymer fest, bevor sich die meisten Flüssigkeitströpfchen ausbilden können. Hierbei entstehen dann nicht-zellförmige oder auch netzwerkartige Mikrostrukturen. Die verschiedenartige Ausbildung von mikroporösen Strukturen über Prozesse mit flüssig-flüssig-Phasenseparation werden eingehend in der DE-A 27 37 745 beschrieben.

Die eingesetzten Zusammensetzungen aus Polymer, Verbindung A und Verbindung B, wobei die Verbindungen A und B zusammen das Lösemittel bzw. Lösemittelsystem ausbilden, müssen gemeinsam in eine einzige homogene flüssige Phase überführbar sein und eine obere kritische Entmischungstemperatur aufweisen, unterhalb derer eine Phasentrennung in zwei flüssige Phasen auftritt. Diese liegt jedoch höher als die Phasentrenntemperatur einer Lösung, die gleiche Anteile Polymer, jedoch als Lösemittel nur die Verbindung A enthält. Bei Systemen Polymer/Verbindung A mit Mischungslücke im flüssigen Aggregatzustand wird durch den Zusatz der Verbindung B die kritische Entmischungstemperatur $T_c$ heraufgesetzt. Für Systeme Polymer und Verbindung A, die im flüssigen Aggregatzustand keine Mischungslücke aufweisen, muß dann durch den Zusatz der Verbindung B ein System geschaffen werden, das im flüssigen Aggregatzustand eine Mischungslücke aufweist. Durch Zugabe der Verbindung B wird eine Steuerung der Porengröße und des Porenvolumens der erhaltenen porösen Strukturen ermöglicht.

Die Verbindung A kann zusätzlich mit einer oder mehreren Flüssigkeiten, insbesondere mit weiteren Lösern verschnitten sein. Auch die Verbindung B kann in Mischung mit einer oder mehreren weiteren Verbindungen eingesetzt werden.

Der Anteil an Polymer sowie das Verhältnis von Verbindung A zu Verbindung B im Lösemittelsystem läßt sich durch Erstellung von Phasendiagrammen mittels einfacher Versuche ermitteln. Derartige Phasendiagramme können nach bekannten Methoden entwickelt werden, wie sie z.B. von C.A. Smolders, J.J. van Aartsen, A. Steenbergen, Kolloid-Z. und Z. Polymere, 243 (1971), S. 14-20, beschrieben werden.

Die Polymerkomponente kann aus einem einzelnen Polyolefin oder aus einer Mischung aus mehreren Polyolefinen bestehen. Mischungen aus verschiedenen Polyolefinen sind hierbei insofern interessant, als dadurch verschiedene Eigenschaften wie z.B. Permeabilitäten oder mechanische Eigenschaften optimiert werden können. So läßt sich z.B. durch Zugabe bereits geringer Mengen eines Polyolefins mit ultrahohem Molekulargewicht, also beispielsweise mit einem Molekulargewicht von mehr als $10^6$ Dalton, ein starker Einfluß auf die mechanischen Eigenschaften nehmen. Voraussetzung ist dabei natürlich, daß die dabei eingesetzten Polyolefine in dem verwendeten Lösemittelsystem löslich sind.

In einer vorteilhaften Ausgestaltung des Verfahrens ist das mindestens eine Polymer ein ausschließlich aus Kohlenstoff und Wasserstoff bestehendes Polyolefin. Besonders bevorzugte Polyolefine sind Polypropylen und Poly(4-methyl-1-penten) oder Mischungen dieser Polyolefine untereinander oder mit anderen Polyolefinen. Von besonderem Vorteil ist die Verwendung von Poly(4-methyl-1-penten) oder von einer Mischung von Poly(4-methyl-1-penten) mit Polypropylen. Hiermit lassen sich hohe Gastransferraten bei guten mechanischen Eigenschaften der erfindungsgemäßen Membranen realisieren. Als Verbindungen A und B, die gemeinsam das Lösemittelsystem ausbilden, können solche Verbindungen eingesetzt werden, die die genannten Bedingungen erfüllen. Bei Verwendung von Poly(4-methyl-1-penten) und/oder Polypropylen als Polymerkomponente sind als Verbindung A Dioctyladipat und als Verbindung B Glycerintriacetat besonders geeignet.

Bevorzugt liegt der Polymeranteil des Gemischs, aus dem die Lösung ausgebildet wird, bei 30-60 Gew.-% und der Anteil des Lösemittelsystems, bestehend aus den Verbindungen A und B, bei 70-40 Gew.-%. Besonders bevorzugt liegt der Polymeranteil bei 35-50 Gew.-% und der Anteil der Verbindungen A und B bei 65-50 Gew.-%. Gegebenenfalls können der Polymerkomponente, den Verbindungen A und B oder auch der Polymerlösung weitere Stoffe wie z.B. Antioxidantien, Keimbildungsmittel, Füllstoffe, Komponenten zur Verbesserung der Biokompatibilität, d.h. der Blutverträglichkeit bei Einsatz der Membran bei der Oxygenation, z.B. Vitamin E, und ähnliche als Additive zugegeben werden.

Die aus Polymerkomponente und dem Lösemittelsystem ausgebildete Polymerlösung wird mittels geeigneter Formwerkzeuge, d.h. Düsen ausgeformt, um schließlich Membranen vorzugsweise in Form von Flachmembranen oder Hohlfasermembranen zu erhalten. Dabei können übliche Formwerkzeuge wie Breitschlitzdüsen, profilierte Düsen, Ringschlitzdüsen oder Hohlfadendüsen eingesetzt werden.

Der aus der Düse austretende Formkörper, d.h. die aus der Düse austretende, ausgeformte Polymerlösung wird zumindest mit einer seiner Oberflächen einer die Verdampfung der Verbindung B fördernden gasförmigen Atmosphäre ausgesetzt, bevor er abgekühlt wird. Gleichzeitig ist von Vorteil, daß ein kontinuierlicher Austausch der gasförmigen Atmosphäre erfolgt, damit es nicht zu einer Anreicherung der Verbindung B in der Atmosphäre kommt, die eine weitere Verdampfung der Verbindung B zumindest reduziert. Bevorzugt wird zur Ausbildung der gasförmigen Atmosphäre Luft eingesetzt. Ebenso bevorzugt werden Stickstoff oder andere Inertgase eingesetzt oder auch dampfförmige Medien. Vorteilhafterweise ist die gasförmige Atmosphäre klimatisiert, und die gasförmige Atmosphäre hat vorzugsweise eine Temperatur, die der Düsentemperatur entspricht.

Um einen genügenden Anteil an Verbindung B verdampfen zu können, wird der Formkörper mit zumindest einer seiner Oberflächen bevorzugt während mindestens 0,5 ms der gasförmigen Atmosphäre ausgesetzt.

Für das beschriebene Verfahren zur Herstellung der erfindungsgemäßen Membranen ist es erforderlich, daß die Siedetemperatur der Verbindung A mindestens um 50°C, bevorzugt um mindestens 100°C höher ist als diejenige der Verbindung B. Vorteilhafterweise sollte die Düsentemperatur nicht wesentlich niedriger sein als der Siedepunkt der Verbindung B, andererseits aber auch nicht zu weit darüber liegen, um ein Verdampfen der Verbindung B in der Düse zu vermeiden. Bevorzugt wird daher die Düsentemperatur so eingestellt, daß die Differenz aus der Siedetemperatur der Verbindung B und der Düsentemperatur im Bereich zwischen -10°C und +70°C und besonders bevorzugt zwischen 0°C und 40°C liegt, wobei die Düsentemperatur gleichzeitig oberhalb der kritischen Entmischungstemperatur der Polymerlösung liegt.

Es wird angenommen, daß es bei Durchführung dieses zuvor beschriebenen Verfahrens im Bereich der gasförmigen Atmosphäre an der der gasförmigen Atmosphäre ausgesetzten Oberfläche bevorzugt zu einem Verdampfen zumindest eines Teils der Verbindung B aus der Oberfläche und dem angrenzenden oberflächennahen Bereich des Formkörpers kommt, wohingegen die Verbindung A aufgrund der höheren Siedetemperatur im wesentlichen im Formkörper verbleibt. Daraus folgt dann, daß an dieser Oberfläche bzw. im oberflächennahen Bereich der Gehalt an Verbindung B in der Polymerlösung deutlich abnimmt und damit der Gehalt an Verbindung A zunimmt, d.h. es kommt dort zu einer Anreicherung des Lösers. Bei hohem Lösemittelgehalt aber ist bei Abkühlung eine Phasenseparation so langsam bzw. kann vor Verfestigung infolge der Abkühlung keine Phasenseparation mehr ablaufen, so daß die Entstehung einer polymerarmen Phase, die nach Extraktion des Lösemittelsystems zur Porenbildung führt, nur unzureichend bzw. gar nicht mehr möglich ist.

In der an die gasförmige Atmosphäre angrenzenden Schicht der ausgeformten Polymerlösung, die im folgenden als Außenschicht bezeichnet wird, findet daher keine oder nur eine sehr geringe Phasenseparation in eine lösemittelreiche und lösemittelarme Phase statt. Gebiete der lösemittelreichen Phase, die bei späterer Extraktion des Lösemittelsystems Poren ergeben, fehlen daher zumindest weitgehend in der Außenschicht, d.h. die Außenschicht ist zumindest weitgehend porenfrei. Diese Schicht stellt gemäß der vorliegenden Erfindung eine Trennschicht mit dichterer Struktur dar, wobei sich bei Durchführung des vorliegend beschriebenen Verfahrens Trennschichten mit sehr dünnen Schichtdicken realisieren lassen, deren Struktur von einer dichten Struktur bis hin zu einer nanoporösen Struktur mit Poren kleiner 100 nm eingestellt werden kann. Unter einer dichten Struktur wird hierbei eine Struktur verstanden, für die bei rasterelektronenmikroskopischer Untersuchung mit 60000-facher Vergrößerung keine Poren zu erkennen sind. Im Einzelfall kann die Ausbildung der Trennschicht auch durch einen Verzug der ausgeformten Polymerlösung unterhalb der Düse, d.h. im Luftspalt beeinflußt werden.

In dem an die Außenschicht und damit spätere Trennschicht angrenzenden Bereich der ausgeformten Polymerlösung hingegen findet bei Durchführung des Verfahrens zur Herstellung der erfindungsgemäßen Membranen eine flüssig-flüssig-Phasenseparation statt, die zur Ausbildung einer schwammartigen offenporigen mikroporösen Struktur, d.h. zur Ausbildung der Stützschicht führt. Porengröße und die Porosität der Stützschicht lassen sich durch die Zusammensetzung des Lösemittelsystems aus den Verbindungen A und B in weiten Grenzen einstellen, wobei Volumenporositäten von größer als 50 Vol.-% problemlos erreicht werden.

Im Hinblick auf die Vorgänge bei der Phasenseparation ist es darüber hinaus erforderlich, daß die Viskosität des Lösemittelsystems gering ist. Daher ist die Viskosität der das Lösemittelsystem ausbildenden Mischung der Verbindung A mit der Verbindung B bei Raumtemperatur kleiner als 60 mPa s. Bevorzugt weisen die Verbindung A und die Verbindung B bei Raumtemperatur eine Viskosität von weniger als 50 mPa s auf.

Werden die genannten Bedingungen hinsichtlich der Eigenschaften der Verbindungen A und B sowie hinsichtlich der Düsentemperatur nicht eingehalten, so hat dies einen nachteiligen Einfluß auf die Struktur der erhaltenen Membran.

Im Falle z.B., daß die eingesetzten Verbindungen A und B eine zu hohe Viskosität besitzen, läuft die Phasentrennung in lösemittelreiche und lösemittelarme Phase langsamer ab, da die Diffusion der Polymermoleküle durch die hohe Viskosität des Lösemittelsystems eingeschränkt ist. Es wird angenommen, daß daraus bei einer vorgegebenen Zeit, die für die Phasentrennung zur Verfügung steht, eine unvollständigere Phasentrennung resultiert und sich nur kleine Gebiete aus lösemittelreicher und lösemittelarmer Phase ausbilden. Dies wiederum bedeutet, daß nach Extraktion der Verbindungen A und B eine sehr engporige Struktur entsteht. In einem solchen Fall schließt sich dann an die Trennschicht mit dichterer Struktur eine ebenfalls relativ dichte Stützstruktur mit geringer Porosität an. Gleichzeitig weisen derartige Membranen einen langsamen, graduellen Übergang von der Trennschicht zur Stützschicht auf, und es entsteht so ein relativ dicker kompakter Bereich , was zur Folge hat, daß die Transferraten dieser Membranen sehr gering sind und z.B. für eine Blutoxygenation nicht geeignet sind.

Zur Bereitstellung der die Verdampfung der Verbindung B fördernden gasförmigen Atmosphäre können beispielsweise bei Verwendung eines Abkühlmediums zur Abkühlung des Formkörpers Düse und Abkühlmedium räumlich so beabstandet werden, daß sich dazwischen ein Spalt ausbildet, der die gasförmige Atmosphäre enthält und der vom Formkörper durchlaufen wird. Dabei wird sich an der Oberfläche des Formkörpers, die der gasförmigen Atmosphäre im Spalt ausgesetzt wird, später eine Trennschicht ausbilden.

So kann etwa bei der Herstellung von Flachmembranen die z.B. durch eine Breitschlitzdüse extrudierte Polymerlösung als Flachfolie zunächst durch einen Spalt geführt werden, beispielsweise durch einen Luft enthaltenen Spalt, also einen Luftspalt, bevor sie abgekühlt wird. In diesem Fall wird die Flachfolie allseitig, d.h. mit ihren beiden Oberflächen sowie ihren Seitenkanten von der gasförmigen Atmosphäre umgeben und die resultierende Flachmembran weist daher an ihren beiden Oberflächen eine Trennschicht auf.

Erfolgt die Extrusion der Flachfolie direkt auf einen beheizten Träger z.B. in Form einer Heizwalze und durchläuft die Flachfolie auf dem Träger anschließend noch eine bestimmte Strecke eine gasförmige Atmosphäre, so kommt nur eine Oberfläche der Flachfolie, nämlich die der Heizwalze abgewandte Oberfläche, mit der gasförmigen Atmosphäre in Verbindung, so daß sich nur an dieser Oberfläche eine Trennschicht ausbilden kann. Auf diese Weise wird eine Flachmembran erhalten, die nur auf einer ihrer Oberflächen eine Trennschicht besitzt.

Im Falle der Herstellung von Hohlfasermembranen wird die Polymerlösung durch den Ringspalt der entsprechende Hohlfadendüsen zum Formkörper, d.h. zum Hohlfaden extrudiert. Durch die zentrale Bohrung der Hohlfadendüse wird ein Fluid extrudiert, das als Innenfüllung fungiert, die das Lumen der Hohlfasermembran ausbildet und stabilisiert. Bei der Extrusion wird die Innenfüllung im wesentlichen auf die gleiche Temperatur gebracht wie die Polymerlösung. Der extrudierte Hohlfaden bzw. die resultierende Hohlfasermembran weist dann eine dem Lumen zugewandte Oberfläche, die Innenoberfläche, und eine dem Lumen abgewandte, durch die Wand des Hohlfadens bzw. der Hohlfasermembran von der Innenoberfläche getrennte Oberfläche, die Außenoberfläche auf.

Der die Düse verlassende Hohlfaden kann ebenfalls durch einen Spalt geführt werden, der zwischen Düse und Abkühlmedium ausgebildet ist und der die gasförmige Atmosphäre enthält. Hierdurch kommt der Hohlfaden mit seiner Außenoberfläche in Kontakt mit der die Verdampfung der Verbindung B fördernden gasförmigen Atmosphäre, und die resultierende Hohlfasermembran weist dann an ihrer Außenoberfläche eine Trennschicht auf.

Die bei der Extrusion des Hohlfadens eingesetzte Innenfüllung kann gasförmig sein oder sie kann eine Flüssigkeit sein. Im Falle der Verwendung einer Flüssigkeit als Innenfüllung muß eine Flüssigkeit ausgewählt werden, welche das Polymer bzw. die Polymeren in der ausgeformten Polymerlösung unterhalb der kritischen Entmischungstemperatur der Polymerlösung im wesentlichen nicht löst. Im übrigen können die gleichen Flüssigkeiten zum Einsatz kommen wie sie auch als Abkühlmedium verwendet werden. Vorzugsweise enthält dann auch die Innenfüllung die Verbindungen A und B und besonders bevorzugt auch im gleichen Verhältnis von Verbindung A zu Verbindung B wie das Lösemittelsystem der Polymerlösung. In diesem Falle muß der Hohlfaden mit seiner Außenoberfläche einer die Verdampfung der Verbindung B fördernden gasförmigen Atmosphäre ausgesetzt werden, beispielsweise in einem entsprechenden Spalt, damit die resultierende Hohlfasermembran eine Trennschicht aufweist.

Im Falle, daß das Fluid gasförmig ist, kann es sich um Luft, einen dampfförmigen Stoff oder bevorzugt um Stickstoff handeln.

Im Falle der bevorzugten Verwendung einer gasförmigen Innenfüllung kann die Innenfüllung gleichzeitig eine die Verdampfung der Verbindung B fördernde gasförmige Atmosphäre sein. In diesem Fall werden als Innenfüllung bevorzugt Luft, Stickstoff oder andere Inertgase eingesetzt oder auch dampfförmige Medien. Bei Verwendung einer solchen Innenfüllung, die gleichzeitig eine die Verdampfung der Verbindung B fördernde gasförmige Atmosphäre ist, kann an der Innenoberfläche des Hohlfadens die Ausbildung einer Trennschicht resultieren. Im Einzelfall kann es jedoch auch vorkommen, daß sehr schnell eine Sättigung der gasförmigen Innenfüllung mit dampfförmiger Verbindung B erreicht wird und dadurch insgesamt keine ausreichende Menge an Verbindung B verdampft, wie sie zur Ausbildung einer Trennschicht erforderlich wäre. In diesem Falle weist die Hohlfasermembran an ihrer Innenoberfläche keine Trennschicht auf.

Reicht die Menge an verdampfter Verbindung B zur Ausbildung einer Trennschicht an der Innenoberfläche aus und wird in einem solchen Fall der Hohlfaden nicht mit seiner Außenoberfläche einer die Verdampfung der Verbindung B fördernden Atmosphäre ausgesetzt, also z.B. einer Atmosphäre ausgesetzt, die mit der Verbindung B gesättigt ist, so kann sich dann an der Außenoberfläche keine Trennschicht ausbilden. Somit wird eine Hohlfasermembran erhalten, die nur an ihrer Innenoberfläche eine Trennschicht aufweist.

Nachdem der Formkörper zumindest mit einer seiner Oberflächen einer die Verdampfung der Verbindung B fördernden gasförmigen Atmosphäre ausgesetzt wurde, wird er abgekühlt, so daß eine thermodynamische Nichtgleichgewichts-flüssig-flüssig-Phasentrennung im Formkörper, d.h. in der ausgeformten Polymerlösung erfolgt und im weiteren die Polymerstruktur erstarrt und verfestigt.

Vorzugsweise erfolgt die Abkühlung in einem Abkühlmedium. Beispielsweise kann im Falle der Herstellung von Flachmembranen die ausgeformte Flachfolie zur Abkühlung auch auf eine entsprechend temperierte bzw. gekühlte Kühlwalze abgelegt werden. Das verwendete Abkühlmedium kann gasförmig oder auch flüssig sein. Bevorzugt werden jedoch flüssige Abkühlmedien. Zur Einleitung einer thermodynamischen Nichtgleichgewichts-flüssig-flüssig-Phasentrennung muß die Temperatur des Abkühlmediums unterhalb der kritischen Entmischungstemperatur oder Phasentrenntemperatur der verwendeten Polymerlösung liegen. Vorzugsweise weist das Abkühlmedium eine Temperatur auf, die um mindestens 100°C unterhalb der Phasentrenntemperatur liegt. Es ist auch möglich, die Abkühlung abgestuft in mehreren Schritten durchzuführen.

An die Zusammensetzung des Abkühlmediums bestehen dabei keine besonderen Anforderungen, solange sich das Abkühlmedium gegenüber dem Polymer bzw. den Polymeren inert verhält, d.h. diese unterhalb der kritischen Entmischungstemperatur der Polymerlösung im wesentlichen nicht löst. Das Abkühlmedium kann mit dem Lösemittelsystem mischbar sein oder sich gegenüber dem Lösemittelsystem inert verhalten. Vorteilhafterweise enthält das Abkühlmedium die Verbindung A. Besonders bevorzugt besteht jedoch das Abkühlmedium aus den im Lösemittelsystem verwendeten Verbindungen A und B und weist in einer weiteren besonders bevorzugten Ausführungsform das gleiche Verhältnis von Verbindung A zu Verbindung B wie das Lösemittelsystem auf.

Vorzugsweise befindet sich das Abkühlmedium in einem Schacht oder in einem Spinnrohr, den bzw. das der Formkörper zur Abkühlung dann durchläuft. Hierbei werden das Abkühlmedium und der Formkörper in der Regel in die gleiche Richtung durch den Schacht bzw. das Spinnrohr geführt. Formkörper und Abkühlmedium können mit gleicher oder unterschiedlicher linearer Geschwindigkeit durch das Spinnrohr geführt werden, wobei je nach Erfordernis entweder der Formkörper oder das Abkühlmedium die höhere lineare Geschwindigkeit aufweisen kann. Derartige Verfahrensvarianten werden beispielsweise in der DE-A-28 33 493 oder in der EP-A-133 882 beschrieben.

Nach Abkühlung und Verfestigung der Polymerstruktur werden die Verbindungen A und B aus dem Formkörper entfernt, wodurch die Membran erhalten wird. Die Entfernung kann beispielsweise durch Extraktion erfolgen. Vorzugsweise werden dabei solche Extraktionsmittel eingesetzt, die das Polymer bzw. die Polymere nicht lösen, die jedoch mischbar mit den Verbindungen A und B sind. Anschließend kann eine Trocknung bei erhöhten Temperaturen erforderlich sein, um das Extraktionsmittel aus der Membran zu entfernen.

Vor oder nach der Entfernung zumindest eines wesentlichen Teils des Lösemittelsystems kann eine geringfügige Verstreckung der Membran erfolgen, um insbesondere die Eigenschaften der Trennschicht in gezielter Weise zu modifizieren. So kann die Porengröße der Trennschicht auf die im speziellen Anwendungsfall der resultierenden Membran erforderliche Größe eingestellt werden. Beispielsweise kann eine dichte Trennschicht durch die Verstreckung aufgerissen werden, so daß Poren in der Trennschicht entstehen. Die Poren sollten jedoch nicht zu groß werden und erfindungsgemäß eine Größe von 100 nm nicht überschreiten, damit die Membran für den Gasaustausch geeignet ist und ein Flüssigkeitsdurchbruch vermieden werden kann. Daher sollte die Verstreckung in der Regel 10 % nicht überschreiten. Die Verstrekkung kann nach Erfordernis auch in mehrere Richtungen erfolgen und wird vorteilhafterweise unter erhöhten Temperaturen vorgenommen. Beispielsweise kann eine solche Verstreckung auch während einer gegebenenfalls erforderlichen Trocknung der Membran nach der Extraktion durchgeführt werden.

Die erfindungsgemäße Membran zeichnet sich aufgrund ihrer Struktur durch hohe Gastransferraten bei gleichzeitig hoher Sicherheit gegenüber einem Durchbruch der Flüssigkeit, von der bei Anwendung der erfindungsgemäßen Membran eine gasförmige Komponente abgetrennt oder der eine gasförmige Komponente hinzugefügt werden soll, sowie durch gute mechanische Eigenschaften aus. Hierzu ist es erforderlich, daß die Membran eine hohe Volumenporosität aufweist, wobei diese im wesentlichen durch die Struktur der Stützschicht bestimmt ist, und eine definierte dichte oder nanoporöse Trennschicht mit geringer Dicke.

Die Stützschicht der erfindungsgemäßen Membran kann verschiedene Strukturen aufweisen. Sie kann eine zellförmige Struktur aufweisen, bei der die Poren als umschlossene Mikrozellen beschrieben werden können, die von Kanälen, kleineren Poren oder Durchlässen miteinander verbunden sind. Sie kann auch eine nichtzellförmige Struktur aufweisen, bei der die Polymerphase und die Poren sich durchdringende Netzwerkstrukturen ausbilden. In jedem Fall ist aber die Stützschicht frei von Makrovoids, also frei von solchen Poren, die in der Literatur auch häufig als Fingerporen oder Kavernen bezeichnet werden.

Die Poren der Stützschicht können jede beliebige Geometrie aufweisen und z.B. von länglicher, zylindrischer, runder Form oder auch von einer mehr oder weniger unregelmäßigen Gestalt sein. Erfindungsgemäß sind die Poren in der Stützstruktur im Mittel im wesentlichen isotrop. Hierunter ist zu verstehen, daß, wenngleich die einzelnen Poren auch eine längliche Form besitzen können, die Poren im Mittel in alle Raumrichtungen im wesentlichen gleiche Ausdehnung aufweisen, wobei Abweichungen zwischen den Ausdehnungen in den einzelnen Raumrichtungen von höchstens 20% eingeschlossen sind.

Bei einer zu geringen Volumenporosität, d.h. einem zu geringen Anteil an Poren bezogen auf das Gesamtvolumen der Membran sind die erreichbaren Gastransferraten zu gering. Andererseits führt ein zu hoher Anteil an Poren in der Membran zu mangelhaften mechanischen Eigenschaften, und die Membran läßt sich in nachfolgenden Verarbeitungprozessen nicht mehr problemlos verarbeiten. Daher weist die erfindungsgemäße Membran eine Volumenporosität im Bereich von größer als 50 Vol.-% bis kleiner als 75 Vol.-%, bevorzugt im Bereich von größer als 50 Vol.-% bis kleiner als und 65 Vol.-% auf.

Die erfindungsgemäße Membran kann nur an einer ihrer Oberflächen eine Trennschicht aufweisen, sie kann jedoch auch an ihren beiden Oberflächen eine Trennschicht aufweisen. Die Trennschicht hat einerseits Einfuß auf die Transferraten, andererseits aber auch auf die Durchbruchzeit, d.h. auf die Zeitspanne, die die Membran gegenüber einem Durchbruch der Flüssigkeit, von der bei Anwendung der erfindungsgemäßen Membran eine gasförmige Komponente abgetrennt oder der eine gasförmige Komponente hinzugefügt werden soll, oder gegenüber einem Durchbruch von in der Flüssigkeit enthaltenen Komponenten sicher ist. So resultieren bei einer dichten Trennschicht sehr lange Durchbruchzeiten, jedoch sind die Transferraten in ihrer Größe begrenzt, da in dichten Membranschichten der Gastransfer allein über eine vergleichsweise langsame Lösungs-Diffusion erfolgt im Unterschied zum wesentlich größeren Knudsen Fluß in porösen Strukturen. Im Falle einer nanoporösen Trennschicht hingegen sind die Gastransferraten gegenüber einer dichten Trennschicht erhöht, jedoch können sich aufgrund der Poren dann kürzere Durchbruchzeiten ergeben.

In einer bevorzugten Ausführungsform der erfindungsgemäßen Membran ist die mindestens eine Trennschicht dicht. In einer weiteren bevorzugten Ausführungsform weist die mindestens eine Trennschicht Poren mit einem mittleren Durchmesser zwischen 10 nm und 100 nm auf. Dabei darf die Dicke der Trennschicht nicht zu gering sein, da hierdurch die Gefahr für Fehlstellen und damit für einen Durchbruch erhöht wird. Allerdings ist auch dann die Zeit bis zum tatsächlichen Durchbruch dennoch relativ lang, da bei den erfindungsgemäßen Membranen keine bevorzugte Richtung für den Fluß einer Flüssigkeit vorliegt, sondern der von der Flüssigkeit zurückzulegende Weg aufgrund der Porenstruktur sehr gewunden ist. Im Unterschied hierzu sind die Membranen zu sehen, die nach dem erwähnten Schmelz-Streckverfahren hergestellt sind und bei denen aufgrund der ausgeprägten Anisotropie der Poren eine bevorzugte Richtung für den Fluß von Flüssigkeiten von der einen Oberfläche zur anderen resultiert.

Während bei zu geringen Dicken der Trennschicht die Gefahr für Fehlstellen zu groß wird, werden andererseits bei einer zu großen Trennschichtdicke die Transferraten zu gering. Bevorzugt liegt daher die Dicke der Trennschicht zwischen 0,1 μm und 1 μm, besonders bevorzugt zwischen 0,1 μm und 0,6 μm. Die Dicke der Trennschicht kann für die erfindungsgemäßen Membranen auf einfache Weise durch Ausmessen der Schicht anhand von mittels Rasterelektronenmikroskopie erstellten Bruchbildern oder mittels Transmissionselektronenmikroskopie erstellten Ultradünnschnittcharakterisierungen ermittelt werden.

Eine wichtige Anwendung der erfindungsgemäßen Membranen ist die Oxygenation von Blut. Bei diesen Anwendungen spielt, wie bereits ausgeführt wurde, die Zeit eine Rolle, die die Membran stabil ist gegenüber einem Durchbruch von Blutplasma, d.h. die Plasmadurchbruchzeit. Hierbei ist hervorzuheben, daß ein Plasmadurchbruch ein wesentlich komplexerer Vorgang ist als das bloße Durchdringen einer hydrophilen Flüssigkeit durch eine hydrophobe Membran. Nach gängiger Lehrmeinung wird ein Plasmadurchbruch dadurch hervorgerufen, daß zunächst durch im Blut enthaltene Phospholipide eine Hydrophilierung des Porensystems der Membran erfolgt und in einem nachgelagerten Schritt schlagartig ein Eindringen von Blutplasma in das hydrophilierte Porensystem stattfindet. Als kritische Größe für einen Flüssigkeitsdurchbruch wird daher die Plasmadurchbruchzeit angesehen. Die erfindungsgemäßen Membranen weisen bevorzugt eine Plasmadurchbruchzeit von mindestens 20 Stunden, besonders bevorzugt eine Plasmadurchbruchzeit von mindestens 48 Stunden auf.

Dabei besitzt die erfindungsgemäße Membran trotz Vorhandenseins einer Trennschicht mit dichterer Struktur hohe Gastransferraten, die von vergleichbarer Größe sind wie oder sogar größer sind als diejenigen konventioneller Membranen für den Gastransfer ohne eine solche Trennschicht. Als Maß für die Gastransferleistung der Membran wird die $O_2$-Transferrate und die $CO_2$-Transferrate angesehen, jeweils gegenüber Wasser als das jeweilige Gas aufnehmende bzw. abgebende Flüssigkeit. Bevorzugt weist die erfindungsgemäße Membran eine $O_2$-Transferrate von >140 ml/ (min*m$^2$) und eine $CO_2$-Transferrate von >1900 ml / (min*m$^2$) auf und besonders bevorzugt eine $O_2$-Transferrate von >190 ml/(min*m$^2$) und eine $CO_2$-Transferrate von >2200 ml/(min*m$^2$).

Bei einer bevorzugten Ausführungsform der erfindungsgemäßen Membran ändert sich die Membranstruktur beim Übergang von der Trennschicht zur Stützschicht abrupt, d.h. die Membranstruktur wechselt im wesentlichen übergangslos und sprunghaft von der mikroporösen Stützstruktur zur Trennschicht. Membranen mit einer derartigen Struktur weisen gegenüber solchen Membranen mit einem graduellen Übergang von der Trennschicht zur Stützschicht den Vorteil einer höheren Durchlässigkeit der Stützschicht für zu transferierenden Gase aus, da die Stützschicht in ihrem an die Trennschicht angrenzenden Bereich weniger kompakt ist.

Die erfindungsgemäße hydrophobe Membran besteht hauptsächlich aus mindestens einem Polymer, ausgewählt aus der Gruppe der Polyolefine. Das mindestens eine Polymer kann ein einzelnes Polyolefin oder eine Mischung aus mehreren Polyolefinen sein. Mischungen aus Polyolefinen mit unterschiedlichem Molekulargewicht oder aus verschiedenen Polyolefinen sind hierbei insofern interessant, als dadurch verschiedene Eigenschaften wie z.B. Gastransferraten oder mechanische Eigenschaften optimiert werden können. So läßt sich z.B. durch Zugabe bereits geringer Mengen eines Polyolefins mit ultrahohem Molekulargewicht, also beispielsweise mit einem Molekulargewicht von mehr als 10$^6$ Dalton, ein starker Einfluß auf die mechanischen Eigenschaften nehmen.

Bevorzugt ist die Membran aus einem Polyolefin zusammengesetzt, das ausschließlich aus Kohlenstoff und Wasserstoff besteht. Besonders bevorzugt besteht die Membran aus Polypropylen oder Poly(4-methyl-1-penten) oder Mischungen dieser Polyolefine mit anderen Polyolefinen. Mit besonderem Vorteil wird Poly(4-methyl-1-penten) oder eine Mischung von Poly(4-methyl-1-penten) mit Polypropylen verwendet. Hiermit lassen sich hohe Gastransferraten bei guten mechanischen Eigenschaften der Membranen realisieren. Gegebenenfalls kann das mindestens eine Polymer auch weitere Stoffe wie z.B. Antioxidantien, Keimbildungsmittel, Füllstoffe, Komponenten zur Verbesserung der Biokompatibilität, d.h. der Blutverträglichkeit bei Einsatz der Membran bei der Oxygenation, z.B. Vitamin E, und ähnliche als Additive enthalten.

In einer bevorzugten Ausführungsform ist die Membran eine Flachmembran. Vorzugsweise besitzt die Flachmembran eine Dicke zwischen 10 und 300 μm, besonders bevorzugt zwischen 50 und 150 μm. Die Flachmembran kann eine Trennschicht nur an einer ihrer Oberflächen oder auch an ihren beiden Oberflächen aufweisen.

In einer ebenfalls bevorzugten Ausführungsform ist die erfindungsgemäße Membran eine Hohlfasermembran. Je nach Ausführung kann diese eine Trennschicht nur an ihrer Innenoberfläche, d.h. an ihrer dem Lumen zugewandten Oberfläche, oder nur an ihrer Außenoberfläche, d.h. der dem Lumen abgewandten Oberfläche aufweisen oder aber sowohl an ihrer Innenoberfläche als auch an ihrer Außenoberfläche eine Trennschicht besitzen. Die Hohlfasermembran weist bevorzugt einen Durchmesser zwischen 10 und 500 μm, besonders bevorzugt einen Durchmesser zwischen 100

und 300 μm auf. Günstig ist eine Dicke der Wand der Hohlfasermembran zwischen 5 und 150 μm, besonders günstig eine Dicke zwischen 10 und 100 μm.

Die erfindungsgemäße Membran besitzt hervorragende mechanische Eigenschaften, wodurch eine problemlose Weiterverarbeitung in nachfolgenden Verarbeitungsschritten möglich ist. Beispielsweise hat es sich bei Verwendung von Hohlfasermembranen als günstig in Bezug auf die Leistungscharakteristik daraus hergestellter Membranmodule erwiesen, wenn die Hohlfasermembranen zunächst beispielsweise mittels geeigneter Wirkverfahren zu Matten aus zueinander im wesentlichen parallelen Hohlfasermembranen verarbeitet werden, aus denen dann entsprechende Bündel hergestellt werden. Damit sind textile Verarbeitungsverfahren verbunden, die hohe Anforderungen an die mechanischen Eigenschaften der Membranen stellen, insbesondere an die Festigkeit und die Dehnung. Diese Anforderungen werden von der erfindungsgemäßen Membran erfüllt. Die erfindungsgemäßen Hohlfasermembranen weisen bevorzugt eine Bruchkraft von mindestens 70 cN und eine Bruchdehnung von mindestens 75% auf.

Die erfindungsgemäßen Membranen lassen sich in zahlreichen Anwendungsgebieten einsetzen, bei denen eine Membran mit dichter oder nanoporöser Trennschicht erforderlich ist. Bevorzugt ist die erfindungsgemäße Membran geeignet für Anwendungen im Bereich des Gasaustausches, bei denen gasförmige Komponenten aus Flüssigkeiten abgetrennt werden sollen oder zu diesen hinzugefügt werden sollen. Aufgrund ihrer hohen Plasmadichtigkeit, d.h. ihrer langen Plasmadurchbruchzeiten sowie ihrer hohen Gastransferleistungen für $O_2$ und $CO_2$ sind die erfindungsgemäßen Membranen hervorragend geeignet für den Einsatz in Oxygenatoren, d.h. für die Oxygenation von Blut und insbesondere für die Langzeitoxygenation von Blut.

Die Erfindung soll anhand der nachfolgenden Beispiele und Figuren näher erläutert werden. Es zeigen:

Fig. 1:    Rasterelektronenmikroskopische (REM-) Aufnahme der äußeren Oberfläche einer Hohlfasermembran gemäß Beispiel 1 bei 6750-facher Vergrößerung

Fig. 2:    REM-Aufnahme der äußeren Oberfläche einer Hohlfasermembran gemäß Beispiel 1 bei 60000-facher Vergrößerung

Fig. 3:    REM-Aufnahme der Bruchfläche senkrecht zur Längsachse einer Hohlfasermembran gemäß Beispiel 1 bei 27000-facher Vergrößerung

Fig. 4:    REM-Aufnahme der äußeren Oberfläche einer Hohlfasermembran gemäß Beispiel 2 bei 60000-facher Vergrößerung

Fig. 5:    REM-Aufnahme der äußeren Oberfläche einer Hohlfasermembran gemäß Vergleichsbeispiel 1 bei 6750-facher Vergrößerung

Fig. 6:    REM-Aufnahme der äußeren Oberfläche einer Hohlfasermembran gemäß Beispiel 3 bei 60000-facher Vergrößerung

Fig. 7:    REM-Aufnahme der äußeren Oberfläche einer Hohlfasermembran gemäß Beispiel 5 bei 60000-facher Vergrößerung

Fig. 8:    REM-Aufnahme der Bruchfläche senkrecht zur Längsachse einer Hohlfasermembran gemäß Beispiel 5 mit Trennschicht an der äußeren Oberfläche, 27000-fache Vergrößerung

Fig. 9:    REM-Aufnahme der Bruchfläche senkrecht zur Längsachse einer Hohlfasermembran gemäß Beispiel 5 mit offenporiger mikroporöser innerer Oberfläche, 13500-fache Vergrößerung

Fig. 10:   REM-Aufnahme der äußeren Oberfläche einer Hohlfasermembran gemäß Beispiel 7 bei 60000-facher Vergrößerung

Fig. 11:   REM-Aufnahme der Bruchfläche senkrecht zur Längsachse einer Hohlfasermembran gemäß Beispiel 7 mit Trennschicht an der inneren Oberfläche, 9000-fache Vergrößerung

Fig. 12:   REM-Aufnahme der Bruchfläche senkrecht zur Längsachse einer Hohlfasermembran gemäß Beispiel 7 mit Trennschicht an der äußeren Oberfläche, 9000-fache Vergrößerung

Fig. 13:   REM-Aufnahme der äußeren Oberfläche einer Hohlfasermembran gemäß Beispiel 8 bei 60000-facher Vergrößerung

Fig. 14: REM-Aufnahme der Bruchfläche senkrecht zur Längsachse einer Hohlfasermembran gemäß Beispiel 8 mit Trennschicht an der äußeren Oberfläche, 13500-fache Vergrößerung

Fig. 15: REM-Aufnahme der Bruchfläche senkrecht zur Längsachse einer Hohlfasermembran gemäß Beispiel 8 mit offenporiger mikroporöser innerer Oberfläche und Stützstruktur, 13500-fache Vergrößerung

In den Beispielen wurden die folgenden Methoden zur Charakterisierung der erhaltenen Membranen angewandt:

Bestimmung der Plasmadurchbruchzeit:

Zur Bestimmung der Plasmadurchbruchzeit wird eine auf 37°C temperierte Phospholipidlösung (1,5 g L-$\alpha$-Phosphatidy-LCholine in 500 ml physiologischer Kochsalzlösung gelöst) bei einem Druck von 1.0 bar mit einem Fluß von 6 1/(min*2m$^2$) an der einen Oberfläche einer Membranprobe entlanggeführt. An der anderen Oberfläche der Membranprobe wird Luft entlangströmen lassen, die nach Verlassen der Membranprobe durch eine Kühlfalle geleitet wird. Es wird das Gewicht der in der Kühlfalle gesammelten Flüssigkeit als Funktion der Zeit gemessen. Die Zeit, die bis zum signifikanten Ansteigen des Gewichts, d.h. bis zur ersten signifikanten Flüssigkeitsansammlung in der Kühlfalle vergeht, wird als Plasmadurchbruchzeit bezeichnet.

Bestimmung der $O_2$-Transferraten und der $CO_2$-Transferraten:

Zur Bestimmung der $O_2$-Transferraten und der $CO_2$-Transferraten wird Wasser, das bis zu einer Leitfähigkeit von 40 $\mu$S/cm mit $CO_2$ angereichert wurde, bei 24°C an der einen Oberfläche der Membranprobe entlanggeführt. Hierbei wird die Strömungsgeschwindigkeit des Wassers entlang der Membranoberfläche so eingestellt, daß eine Erhöhung der Geschwindigkeit die ermittelten Transferraten nicht wesentlich beeinflußt. An der anderen Oberfläche der Membranprobe wird $O_2$ entlangströmen gelassen. Hierdurch wird dem Wasser $CO_2$ entzogen und $O_2$ zugeführt. Die Änderung der $CO_2$-Konzentration des Wassers wird über eine Leitfähigkeitsmessung verfolgt. Die Leitfähigkeitswerte L werden über eine empirische Gleichung, die auf Basis von Eichversuchen mit Wasserproben mit unterschiedlicher bekannter $CO_2$-Konzentration ermittelt wurde, in die jeweiligen $CO_2$-Konzentrationen c umgerechnet gemäß der Formel

$$c(CO_2) \; [ml/l] = 0,1702*L^2 \; [\mu S/cm].$$

Für die Erfassung der $O_2$-Konzentration wird ein membranbedeckter amperometrischer Sauerstoffsensor mit potentionstatischem Drei-Elektrodensystem eingesetzt.

Bestimmung der Volumenporosität:

Die Volumenporosität wird in Anlehnung an das in der ASTM D 4197-82, Testmethode B, beschriebene Verfahren durchgeführt. Hierbei wird eine das Membranmaterial nichtbenetzende Flüssigkeit in das Porensystem einer Membranprobe eingepreßt und das Volumen der dabei eingedrungenen Flüssigkeit bestimmt. Die Volumenporosität der Membran berechnet sich dann als Verhältnis dieses Volumens zum Gesamtvolumen der Membranprobe.

Bestimmung der Bruchkraft und der Bruchdehnung:

Zur Charakterisierung der Membran hinsichtlich ihrer Bruchkraft und ihrer Bruchdehnung wird die Membran bei Raumtemperatur mit konstanter Geschwindigkeit bis zum Bruch gedehnt und die hierfür benötigte Kraft zusammen mit der Längenänderung bestimmt.

Bestimmung der Oberflächenporosität:

Die Oberflächenporosität wird mittels rasterelektronenmikroskopischer (REM-) Aufnahmen ermittelt. Hierzu wird eine bei 10000-facher Vergrößerung erhaltene REM-Aufnahme eines Ausschnittes der Membranoberfläche der Größe 8,3 $\mu$m x 6,2 $\mu$m bildanalytisch analysiert. Die REM-Aufnahme wird digitalisiert und die Fläche der sich in der Aufnahme dunkel vom hellen Membranmaterial abhebenden Poren mittels eines Rechners bestimmt. Die Oberflächenporosität berechnet sich dann als das Verhältnis der Porenfläche zur Gesamtfläche.

Bestimmung der mittleren Durchmessers der Poren in der Trennschicht:

Die Bestimmung des mittleren Durchmessers der Poren in der Trennschicht erfolgt analog zu der Bestimmung der Oberflächenporosität mit Hilfe eines bildanalytischen Verfahrens. Hierbei wird für die Poren eine kreisrunde Fläche angenommen. Der mittlere Porendurchmesser ergibt sich als arithmetischer Mittelwert aller auf einer Membranfläche von ca. 8 $\mu$m x 6 $\mu$m bei 60000-facher Vergrößerung sichtbaren Poren.

Beispiel 1:

Bei 260°C wurde eine Lösung von 40 Gew.-% Poly-(4-methyl-1-penten) und 60 Gew.-% eines Gemischs aus 65 Gew.-% Dioctyladipat (Verbindung A) und 35 Gew.-% Glycerintriacetat (Verbindung B) als Lösemittelsystem hergestellt. Die Siedepunkte sowie die Viskositäten dieser beiden Verbindungen sind in der Tabelle 1 wiedergegeben.

Tabelle 1:

| Verbindung | Siedetemperatur [°C] | Viskosität (RT) [mPa s] |
|---|---|---|
| Dioctyladipat (A) | 390 | 14,7 |
| Glycerintriacetat (B) | 258 | 23 |

Diese Lösung wurde durch eine Hohlfadendüse mit einem Ringspalt von 0,3 mm Breite extrudiert und zu Hohlfäden ausgebildet. Als Innenfüllung wurde Stickstoff eingesetzt. Die Düse hatte eine Temperatur von 240°C. Nach einer Luftstrecke von ca. 5 mm durchliefen die Hohlfäden ein von einem auf 18°C temperierten Kühlmedium durchströmtes, 2 m langes Spinnrohr. Als Abkühlmedium wurde ein Gemisch aus 65 Gew.-% Dioctyladipat und 35 Gew.-% Glycerintriacetat eingesetzt. Die Durchströmgeschwindigkeit des Abkühlmediums war der Spinngeschwindigkeit angepaßt und betrug ca. 90 m/min. Infolge der Abkühlung im Spinnrohr kam es zur Phasenseparation und zur Verfestigung der Hohlfäden, so daß diese kontinuierlich aus dem Spinnrohr abgezogen werden konnten. Anschließend wurden die Hohlfäden zur Entfernung des Lösemittelsystems 6 Stunden bei 60°C in Isopropanol extrahiert und die so erhaltenen Hohlfasermembranen nachfolgend bei 120°C während 6 sec. getrocknet. Während der Trocknung erfolgte eine Verstreckung um ca. 5%.

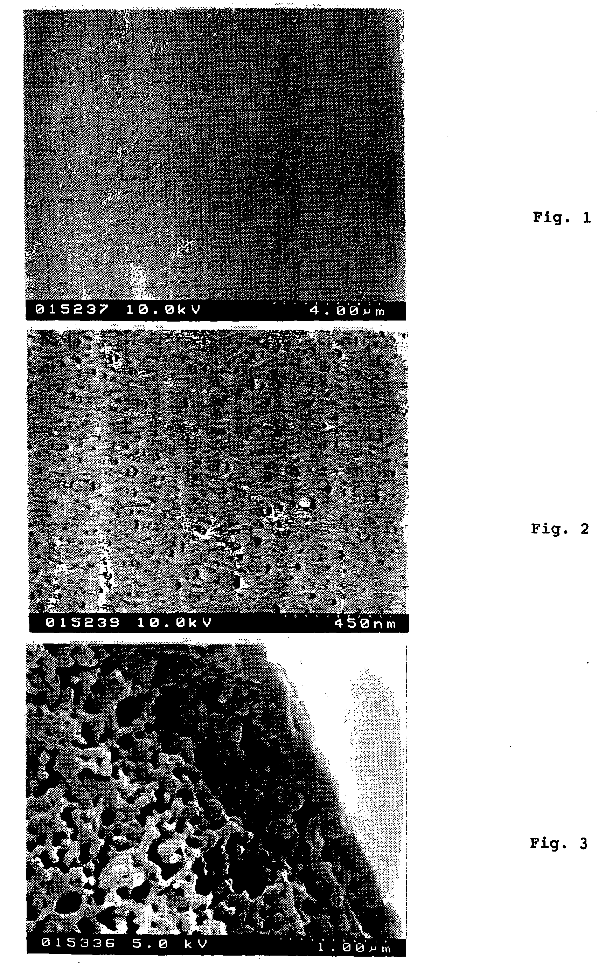

Die Eigenschaften der erhaltenen Hohlfasermembranen sind in den Tabelle 2 zusammengestellt. Bei der rasterelekronenmikroskopischen (REM-) Untersuchung sind für die Hohlfasermembranen gemäß diesem Beispiel bei einer Vergrößerung von 6750 an ihrer äußeren Oberfläche keine Poren feststellbar (Fig. 1). Erst bei einer sehr hohen Vergrößerung ist eine gleichmäßige poröse Struktur mit Poren einer Größe von maximal 100 nm erkennbar (Fig. 2). Das Bruchbild in einer Bruchfläche senkrecht zur Längsachse der Hohlfasermembran läßt deutlich die schwammartige, offenporige mikroporöse Stützstruktur erkennen, an die sich zur Außenoberfläche hin die nanoporöse Trennschicht anschließt, die in diesem Beispiel ein Dicke von ca. 0,2 $\mu$m aufweist (Fig. 3). Durch die extrem dünne Trennschicht wird die Volumenporosität der Membranen nicht signifikant reduziert. Für die Membran gemäß Beispiel 1 ergibt sich eine Volumenporosität von 52,5 Vol.-%. Diese hohe Volumenporosität führt zu den in Tabelle 2 aufgeführten hohen $O_2$- und $CO_2$-Transferraten. Gleichzeitig weisen die Hohlfasermembranen mit einer Bruchkraft von 81 cN und einer Bruchdehnung von 101% mechanische Eigenschaften auf, die eine gute Weiterverarbeitung dieser Membranen ermöglichen.

Beispiel 2:

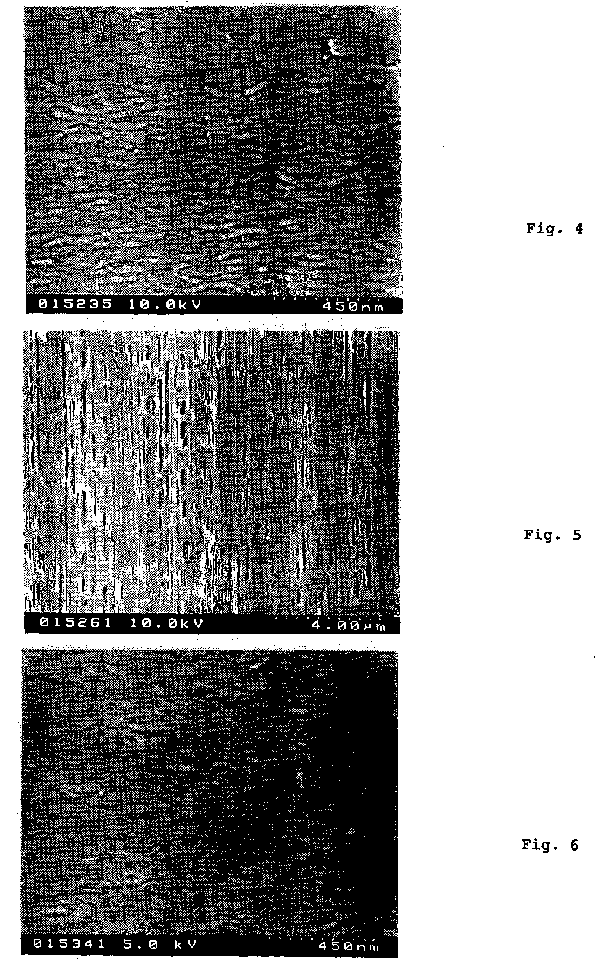

Es wurden Hohlfasermembranen wie in Beispiel 1 hergestellt. Anstelle einer Trocknung bei 120°C zusammen mit einer Verstreckung wurde bei Beispiel 2 eine Trocknung bei Raumtemperatur vorgenommen, bei der die Hohlfasermembranen nicht verstreckt wurden. Die erhaltenen Membranen wiesen die in Tabelle 2 angegebenen Eigenschaften auf. Die Trennschicht an der äußeren Oberfläche der Membran gemäß diesem Beispiel ist im Vergleich zur Trennschicht der Membran gemäß Beispiel 1 dichter: Bei 60000-facher Vergrößerung sind in der rasterelektronenmikroskopischen Aufnahme nur einzelne Poren mit einer Größe von weniger als 50 nm feststellbar (Fig. 4).

Vergleichsbeispiel 1:

Es wurde eine Lösung hergestellt, enthaltend 44 Gew.-% Polypropylen und 56 Gew.-% eines Lösemittelsystems, bestehend aus 75 Gew.-% Sojaöl als Verbindung A und 25 Gew.-% Rizinusöl als Verbindung B. Die Lösung wurde bei 235°C durch eine Hohlfadendüse extrudiert und der extrudierte Hohlfaden nach Durchlaufen eines Luftspalts von 5 mm Länge durch ein Spinnrohr geleitet, in dem sich ein Abkühlmedium befand, das aus 75 Gew.-% Sojaöl und 35 Gew.-% Rizinusöl bestand. Die übrigen Verfahrensbedingungen entsprachen denjenigen des Beispiels 1.

Wie Tabelle 3 zu entnehmen ist und unter Berücksichtigung der Düsentemperatur von 235°C erfüllen die Eigenschaften der in diesem Vergleichsbeispiel verwendeten Verbindungen A und B und die Verfahrensbedingungen nicht die erfindungsgemäß geforderten Eigenschaften und Bedingungen.

Tabelle 3:

| Verbindung | | Siedetemperatur [°C] | Viskosität (RT) [mPa s] |
|---|---|---|---|
| Sojaöl | (A) | (>500)[(x)] | 69 |
| Rizinusöl | (B) | 313 | 950-1100 |
| ([(x)] Sojaöl hat bei 0,067 mbar eine Siedetemperatur von 308°C. Bei Normaldruck zersetzt sich Sojaöl vor dem Sieden. Eine Extrapolation des Wertes für 0,067 mbar auf Normaldruck ergäbe eine Siedetemperatur von über 500°C.) | | | |

Die gemäß diesem Vergleichsbeispiel erhaltenen Hohlfasermembranen weisen eine offenporige Struktur auch an der Außenoberfläche der Membran auf, die bei der Herstellung dem Luftspalt zugewandt war. Dies wird anhand Fig. 5 dargestellten REM-Aufnahme deutlich, nach der in der äußeren Oberfläche zahlreiche Poren einer Größe von mehr als 0,1 $\mu$m zu finden sind. Die offenporige Struktur ist eine Folge der nicht-erfindungsgemäßen Auswahl der das Lösemittelsystem ausbildenden Verbindungen A und B. Als Folge davon sind die Plasmadurchbruchzeiten der Membranen gemäß diesem Vergleichsbeispiel mit 3-5 Stunden nur gering und die Membranen daher für einen Langzeiteinsatz nicht geeignet.

Gleichzeitig besitzen die Hohlfasermembranen gemäß diesem Vergleichsbeispiel mit 44,5 Vol.-% nur eine geringe Volumenporosität, was auf die nicht-erfindungsgemäß hohe Viskosität der im Lösemittelsystem eingesetzten Verbindungen Sojaöl und Rizinusöl zurückgeführt werden kann. Hieraus resultieren auch relativ geringe Transferraten. Die Eigenschaften dieser Membranen sind ebenfalls in Tabelle 2 zusammengestellt. Membranen, hergestellt gemäß diesem Vergleichsbeispiel sind allerdings bei der konventionellen Blutoxygenation einsetzbar.

Beispiel 3:

Es wurde wie in Beispiel 1 vorgegangen. Als Lösemittelsystem und als Abkühlmedium wurde jedoch ein Gemisch aus 55 Gew.-% Dioctyladipat und 45 Gew.-% Glycerintriacetat eingesetzt. Die Düsentemperatur wurde auf 260°C eingestellt. Die so erhaltenen Hohlfasermembranen wiesen die in der Tabelle 2 aufgeführten Eigenschaften auf. Mit dieser Rezeptur kann gegenüber Beispiel 1 die Dichtigkeit der Trennschicht noch erhöht werden. In der REM-Aufnahme sind bei 60000-facher Vergrößerung nur noch vereinzelt Poren mit einer Größe von weniger als 50 nm zu erkennen (Fig. 6). Die Transferraten sind hiervon jedoch - wie anhand Tabelle 2 erkennbar ist - unbeeinflußt, was auf die hohe Volumenporosität von 58,5 Vol.-% zurückzuführen sein dürfte. Für diese Membranen wurde eine Plasmadurchbruchzeit von 48,6 Stunden ermittelt. Bruchkraft und Bruchdehnung der Membranen waren ausreichend für eine gute Weiterverarbeitung zu Hohlfadenmatten mittels eines Wirkprozesses.

Beispiel 4:

Es wurde wie in Beispiel 1 vorgegangen, wobei ein Lösemittelsystem, bestehend aus 60 Gew.-% Dioctyladipat und 40 Gew.-% Glycerintriacetat, und ein Abkühlmedium, bestehend aus 55 Gew.-% Dioctyladipat und 45 Gew.-% Glycerintriacetat, eingesetzt wurde. Auch mit dieser Rezeptur wird mit 61,9 Vol.-% eine sehr hohe Volumenporosität der Hohlfasermembranen und gegenüber der Membran aus Beispiel 3 eine weitere Erhöhung der Gastransferraten erreicht, wie anhand der in Tabelle 2 aufgeführten Ergebnisse zu erkennen ist. Die Plasmadurchbruchzeit wurde zu 20,5 Stunden ermittelt. Die äußere Oberfläche der Membranen gemäß diesem Beispiel weist eine ähnliche Struktur auf wie diejenige der Membranen gemäß Beispiel 1.

Beispiel 5:

Es wurden Hohlfasermembranen wie in Beispiel 1 hergestellt. Anstelle von reinem Poly-(4-methyl-1-penten) wurde eine Mischung aus 90 Gew.-% Poly-(4-methyl-1-penten) und 10 Gew.-% Polypropylen eingesetzt. Die Düsentemperatur war ebenfalls auf 240°C eingestellt.

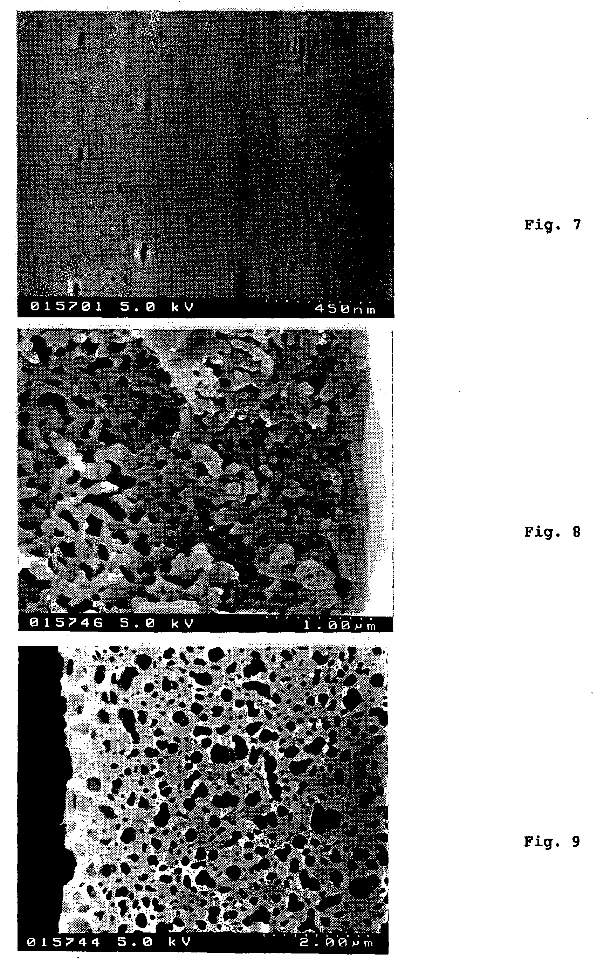

Die Eigenschaften der erhaltenen Hohlfasermembranen sind wiederum der Tabelle 2 zu entnehmen. In der REM-Aufnahme der Außenoberfläche der Membran (Fig. 7) sind einzelne Poren mit einer Größe unterhalb ca. 100 nm zu erkennen, jedoch ist die Porendichte geringer als in Beispiel 1, bei dem reines Poly-(4-methyl-1-penten) als Polymer eingesetzt worden war. Die Bruchflächencharakterisierung mittels REM ergibt, daß die Membran an ihrer äußeren Oberfläche eine ca. 0,1 $\mu$m dicke Trennschicht aufweist (Fig. 8) und daß das Innere der Membranwand sowie die innere Oberfläche schwammartig und offenporig mikroporös ist (Fig. 9). Gegenüber den Membranen aus reinem Poly-(4-methyl-1-penten) gemäß Beispiel 1 sind die Transferraten bei vergleichbaren Volumenporositäten leicht erhöht. Durch den Zusatz des Polypropylen ist darüber hinaus auch insbesondere die Bruchdehnung angestiegen. Die Hohlfasermembranen gemäß diesem Beispiel ließen sich hervorragend zu gewirkten Hohlfasermatten weiterverarbeiten.

Beispiel 6:

Es wurde wie in Beispiel 5 vorgegangen. Anstelle der in Beispiel 5 eingesetzten Polymermischung wurde jedoch eine Mischung aus 75 Gew.-% Poly-(4-methyl-1-penten) und 25 Gew.-% Polypropylen verwendet. Die Porenmorphologie sowie die Eigenschaften der Membran gemäß Beispiel 6 entsprechen in etwa denjenigen der Membranen gemäß Beispiel 5 (s. Tabelle 2).

Beispiel 7:

Es wurden Hohlfasermembranen aus einer Lösung, enthaltend 40 Gew.-% Polypropylen und 60 Gew.-% eines Gemischs aus 60 Gew.-% Dioctyladipat und 40 Gew.-% Glycerintriacetat als Lösemittelsystem hergestellt. Als Abkühlmedium diente ein Gemisch aus 65 Gew.-% Dioctyladipat und 35 Gew.-% Glycerintriacetat. Im übrigen wurde analog zu Beispiel 1 vorgegangen.

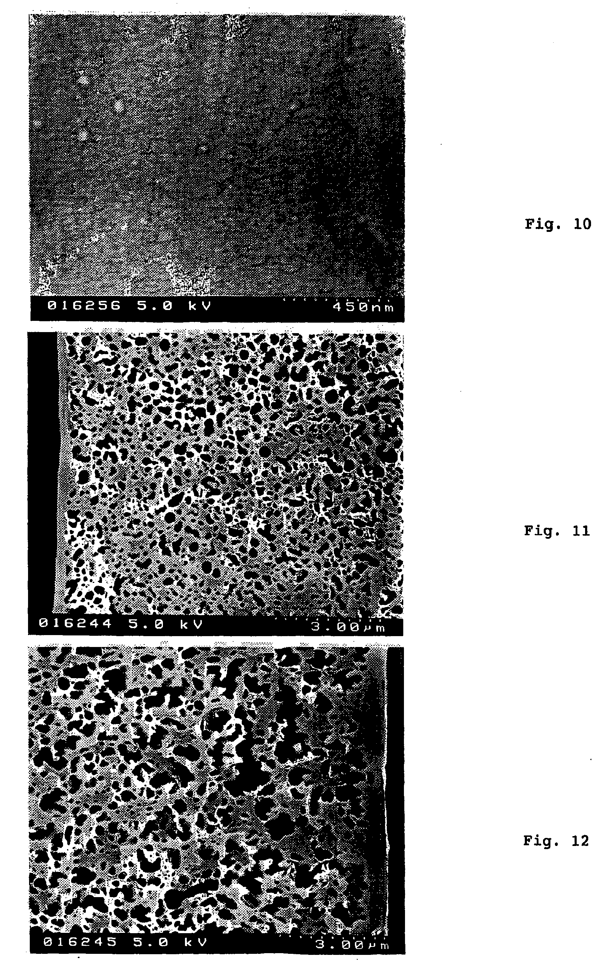

Die Hohlfasermembranen gemäß diesem Beispiel weisen eine dichte Innenoberfläche und eine dichte Außenoberfläche auf, für die auch bei 60000-facher Vergrößerung in der REM-Aufnahme keine Poren zu sehen sind (Fig. 10). Anhand des Bruchbildes aus der REM-Untersuchung der Hohlfasermembranen gemäß diesem Beispiel ist sowohl eine Trennschicht an der inneren Oberfläche (Fig. 11) als auch eine Trennschicht an der Außenoberfläche (Fig. 12) deutlich zu erkennen, wobei der Übergang von der jeweiligen Trennschicht zur Stützschicht abrupt erfolgt. Die Dicke der Trennschicht an der Außenoberfläche kann zu ca. 0,5 $\mu$m und diejenige der Trennschicht an der Innenoberfläche zu ca. 0,3 $\mu$m ermittelt werden. Aufgrund der in der Summe vergleichsweise größeren Dicke der Trennschicht sowie der allgemein geringeren Gaspermeabilität von Polypropylen im Vergleich zu Poly-(4-methyl-1-penten) sind die Transferraten dieser Membran z.T. geringer als diejenigen der Membranen der vorangegangenen Beispiele (s. Tabelle 2). Die Plasmadurchbruchzeit der Membran gemäß diesem Beispiel ist deutlich größer als 20 Stunden; die Messung der Plasmadurchbruchzeit war jedoch nach 24 Stunden abgebrochen worden.

Beispiel 8:

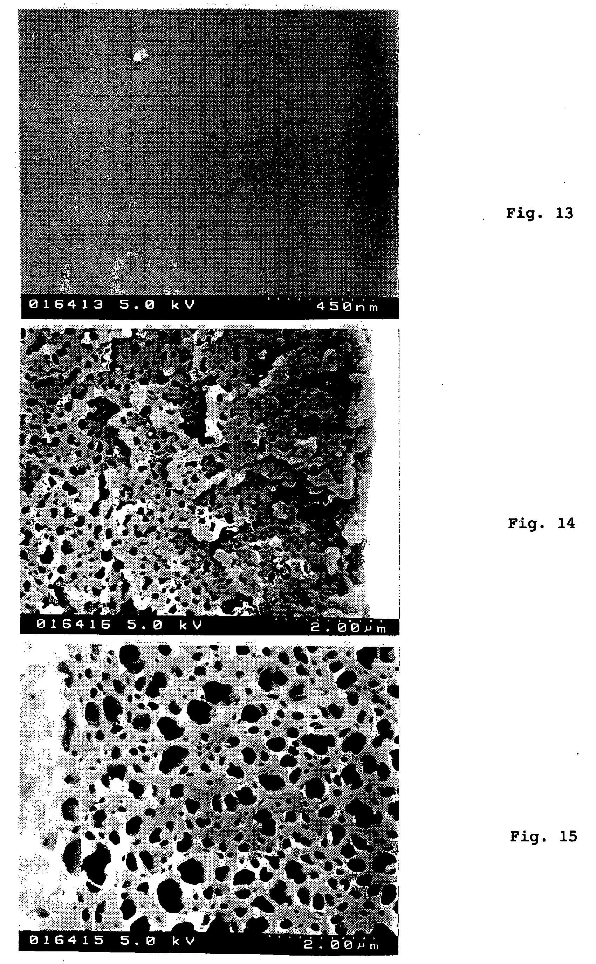

Es wurde wie in Beispiel 5 vorgegangen. Allerdings wurde durch Wahl einer im Vergleich zu derjenigen des Beispiels 5 höheren Extrusionsleistung eine Hohlfasermembran mit dickerer Wand erhalten. Durch die größere Wandstärke resultierten im Vergleich zu Beispiel 5 Membranen mit höherer Bruchkraft und auch mit höherer Bruchdehnung (s. Tabelle 2), wodurch auch die Verstrekkung der Hohlfasermembranen bei der Trocknung im Vergleich zu denjenigen des Beispiels 5 geringer war. Im Gegensatz zu der im Beispiel 5 beschriebenen Membran mit nanoporöser Trennschicht wird nun eine Membran mit dichter Trennschicht an der Außenoberfläche erhalten (Fig. 13), was auf die geringere Verstrekkung zurückzuführen sein dürfte.

Im Bruchbild ist an der äußeren Oberfläche der Membran eine Trennschicht von ca. 0,1-0,2 $\mu$m Dicke zu erkennen (Fig. 14), während das Wandinnere sowie die innere Oberfläche offenporig mikroporös sind (Fig. 15). Trotz der hohen Wanddicke werden für die Membranen gemäß diesem Beispiel hohe Gastransferraten ermittelt, die deutlich über denjenigen konventioneller Membranen für die Oxygenation gemäß Vergleichsbeispiel 1 liegen (s. Tabelle 2). Die Plasmadurchbruchzeit der Hohlfasermembranen gemäß diesem Beispiel 8 konnte zu mindestens 75 Stunden ermittelt werden. Nach Erreichen dieser Zeit wurde die Prüfung abgebrochen.

Tabelle 2:

| Beispiel | Lumen [$\mu$m] | Wand-dicke [$\mu$m] | $O_2$-Transferrate [ml/min*m$^2$] | $CO_2$-Transferrate [ml/min*m$^2$] | Volumen-porosität [%] | Oberfläch.-porosität [%] | Bruchdehnung [%] | Bruchkraft [cN] | Plasmadurchbruchzeit [Std.] |
|---|---|---|---|---|---|---|---|---|---|
| 1 | 263 | 49 | 261 | 2505 | 52,5 | | 101 | 81 | |
| 2 | 262 | 46 | | | | | | | |
| 3 | 265 | 50 | 276 | 2357 | 58,5 | 0,70 | 91 | 76 | 48,6 |
| 4 | 251 | 49 | 292 | 2664 | 61,9 | 0,20 | 77 | 70 | 20,5 |
| 5 | 242 | 51 | 289 | 2875 | 51,2 | 0,45 | 225 | 86 | |
| 6 | 240 | 51 | 287 | 2791 | 51,7 | 0,51 | 204 | 86 | |
| 7 | 212 | 46 | 201 | 2748 | 50,1 | 0,00 | 521 | 176 | >24 |
| 8 | 239 | 95 | 314 | 2505 | 51,2 | 0,47 | 237 | 165 | >75 |
| Vergl.1 | 265 | 55 | 190 | 2220 | 44,5 | 15,00 | 579 | 229 | 3-5 |

**Patentansprüche**

1. Integral asymmetrische, hydrophobe Membran zum Gasaustausch, die aus mindestens einem Polymer, ausgewählt aus der Gruppe der Polyolefine, zusammengesetzt ist und eine erste und eine zweite Oberfläche aufweist, wobei die Membran zwischen der ersten und der zweiten Oberfläche eine Stützschicht mit einer schwammartigen, offenporigen mikroporösen Struktur und zu dieser Stützschicht benachbart an der ersten und/oder der zweiten Oberfläche eine Trennschicht mit dichterer Struktur aufweist, **dadurch gekennzeichnet, daß** die Trennschicht höchstens Poren mit einem mittleren Durchmesser <100 nm aufweist, daß die Stützschicht frei von Makrovoids ist und die Poren in der Stützschicht im Mittel im wesentlichen isotrop sind und daß die Membran eine Porosität im Bereich von größer als 50 Vol.-% bis kleiner 75 Vol.-% aufweist.

2. Membran nach Anspruch 1, **dadurch gekennzeichnet, daß** sich die Membranstruktur beim Übergang von der Trennschicht zur Stützschicht abrupt ändert.

3. Membran nach einem oder beiden der Ansprüche 1 oder 2, **dadurch gekennzeichnet, daß** die Trennschicht dicht ist.

4. Membran nach einem oder beiden der Ansprüche 1 oder 2, **dadurch gekennzeichnet, daß** die Trennschicht offenporig ist und Poren mit einem mittleren Durchmesser zwischen 10 nm und 100 nm aufweist.

5. Membran nach einem oder mehreren der Ansprüche 1 bis 4, **dadurch gekennzeichnet, daß** die Trennschicht eine Dicke zwischen 0,1 $\mu$m und 1 $\mu$m aufweist.

6. Membran nach Anspruch 5, **dadurch gekennzeichnet, daß** die Trennschicht eine Dicke zwischen 0,2 $\mu$m und 0,6 $\mu$m aufweist.

7. Membran nach einem oder mehreren der Ansprüche 1 bis 6, **dadurch gekennzeichnet, daß** die Porosität im Bereich von größer als 50 Vol.-% bis kleiner als 65 Vol.-% liegt.

8. Membran nach einem oder mehreren der Ansprüche 1 bis 7, **dadurch gekennzeichnet, daß** die Membran eine $O_2$-Transferrate von >140 ml/(min*m$^2$) und eine $CO_2$-Transferrate von >1900 ml/(min*m$^2$), jeweils gegenüber auf 24°C temperiertem Wasser als aufnehmender bzw. abgebender Flüssigkeit, aufweist.

9. Membran nach Anspruch 8, **dadurch gekennzeichnet, daß** die Membran eine $O_2$-Transferrate von >190 ml/(min*m$^2$) und eine $CO_2$-Transferrate von >2200 ml/(min*m$^2$) jeweils gegenüber auf 24°C temperiertem Wasser als aufnehmender bzw. abgebender Flüssigkeit, aufweist.

10. Membran nach einem oder mehreren der Ansprüche 1 bis 9, **dadurch gekennzeichnet, daß** die Membran eine Plasmadurchbruchzeit von mindestens 20 Stunden aufweist.

11. Membran nach Anspruch 10, **dadurch gekennzeichnet, daß** die Plasmadurchbruchzeit mindestens 48 Stunden beträgt.

12. Membran nach einem oder mehreren der Ansprüche 1 bis 11, **dadurch gekennzeichnet, daß** das mindestens eine Polymer ein ausschließlich aus Kohlenstoff und Wasserstoff bestehendes Polyolefin ist.

13. Membran nach Anspruch 12, **dadurch gekennzeichnet, daß** das Polyolefin ein Poly-(4-methyl-1-penten) ist.

14. Membran nach Anspruch 12, **dadurch gekennzeichnet, daß** das Polyolefin ein Polypropylen ist.

15. Membran nach Anspruch 12, **dadurch gekennzeichnet, daß** die Membran im wesentlichen aus einer Mischung aus einem Poly-(4-methyl-1-penten) und einem Polypropylen zusammengesetzt ist.

16. Membran nach einem oder mehreren der Ansprüche 1 bis 15, **dadurch gekennzeichnet, daß** die Membran eine Hohlfasermembran ist.

17. Verwendung der Membran nach einem oder mehreren der Ansprüche 1 bis 16 zur Oxygenation von Blut.

**Claims**

1. Integrally asymmetric, hydrophobic membrane for gas exchange, composed of at least one polymer selected from the group of polyolefins, having a first and a second surface, wherein the membrane has a supporting layer with a sponge-like, open-pored, microporous structure between the first and the second surfaces, and a separating layer with a structure of higher density on the first and/or the second surface adjacent to this supporting layer, **characterized in that** the separating layer has pores not exceeding an average diameter of <100 nm, that the supporting layer is free from macrovoids and the pores in the supporting layer are on average essentially isotropic and that the membrane has a porosity in the range of greater than 50 vol.% to less than 75 vol.%.

2. Membrane according to Claim 1, **characterized in that** the membrane structure changes abruptly at the transition from the separating layer to the supporting layer.

3. Membrane according to one or both of Claims 1 or 2, **characterized in that** the separating layer is dense.

4. Membrane according to one or both of Claims 1 or 2, **characterized in that** the separating layer is open-pored and has pores with an average diameter between 10 nm and 100 nm.

5. Membrane according to one or more of Claims 1 to 4, **characterized in that** the separating layer has a thickness between 0.1 $\mu$m and 1 $\mu$m.

6. Membrane according to Claim 5, **characterized in that** the separating layer has a thickness between 0.2 $\mu$m and 0.6 $\mu$m.

7. Membrane according to one or more of Claims 1 to 6, **characterized in that** the porosity lies in the range of greater than 50 vol.% to less than 65 vol.%.

8. Membrane according to one or more of Claims 1 to 7, **characterized in that** the membrane has an $O_2$ transfer rate of >140 ml/(min*m$^2$) and a $CO_2$ transfer rate of >1900 ml/(min*m$^2$), in each case to water tempered to 24°C as the absorbing or releasing fluid.

9. Membrane according to Claim 8, **characterized in that** the membrane has an $O_2$ transfer rate of >190 ml/(min*m$^2$) and a $CO_2$ transfer rate of >2200 ml/(min*m$^2$), in each case to water tempered to 24°C as the absorbing or releasing fluid.

10. Membrane according to one or more of Claims 1 to 9, **characterized in that** the membrane has a plasma breakthrough time of at least 20 hours.

11. Membrane according to Claim 10, **characterized in that** the plasma breakthrough time is at least 48 hours.

12. Membrane according to one or more of Claims 1 to 11, **characterized in that** the at least one polymer is a polyolefin consisting exclusively of carbon and hydrogen.

13. Membrane according to Claim 12, **characterized in that** the polyolefin is a poly(4-methyl-1 -pentene).

14. Membrane according to Claim 12, **characterized in that** the polyolefin is a polypropylene.

15. Membrane according to Claim 12, **characterized in that** the membrane is composed essentially of a mixture of poly(4-methyl-1-pentene) and a polypropylene.

16. Membrane according to one or more of Claims 1 to 15, **characterized in that** the membrane is a hollow-fiber membrane.

17. Use of the membrane according to one or more of Claims 1 to 16 for the oxygenation of blood.

**Revendications**

1. Membrane hydrophobe asymétrique, faite d'une seule pièce et conçue pour l'échange de gaz, qui est composée d'au moins un polymère choisi dans l'ensemble des polyoléfines et qui présente une première surface et une deuxième surface, laquelle membrane comporte, entre ces première et deuxième surfaces, une couche support, dotée d'une structure microporeuse de type éponge à pores ouverts, et une couche séparatrice, adjacente à cette couche support du côté de la première surface et/ou de la deuxième surface et dotée d'une structure plus dense, **caractérisée en ce que** la couche séparatrice présente des pores dont le diamètre moyen est au plus inférieur à 100 nm, la couche support ne comporte pas de macrovides et les pores de cette couche support sont en moyenne essentiellement isotropes, et la membrane présente une porosité située dans l'intervalle allant de plus de 50 % en volume à moins de 75 % en volume.

2. Membrane conforme à la revendication 1, **caractérisée en ce que** la structure de la membrane est brusquement modifiée au niveau de la transition de la couche séparatrice à la couche support.

3. Membrane conforme à la revendication 1 ou 2 ou à ces deux revendications, **caractérisée en ce que** la couche séparatrice est dense.

4. Membrane conforme à la revendication 1 ou 2 ou à ces deux revendications, **caractérisée en ce que** la couche séparatrice est à pores ouverts et présente des pores dont le diamètre moyen vaut de 10 à 100 nm.

5. Membrane conforme à l'une ou plusieurs des revendications 1 à 4, **caractérisée en ce que** la couche séparatrice est épaisse de 0,1 à 1 $\mu$m.

6. Membrane conforme à la revendication 5, **caractérisée en ce que** la couche séparatrice est épaisse de 0,2 à 0,6 $\mu$m.

7. Membrane conforme à l'une ou plusieurs des revendications 1 à 6, **caractérisée en ce que** sa porosité se situe dans l'intervalle allant de plus de 50 % en volume à moins de 65 % en volume.

8. Membrane conforme à l'une ou plusieurs des revendications 1 à 7, **caractérisée en ce qu'**elle présente une vitesse de transfert d'oxygène de plus de 140 mL/min.m$^2$ et une vitesse de transfert de gaz carbonique de plus de 1900 mL/min.m$^2$, vitesses mesurées dans chaque cas avec de l'eau thermostatée à 24 °C en tant que liquide absorbant ou liquide donneur.

9. Membrane conforme à la revendication 8, **caractérisée en ce qu'**elle présente une vitesse de transfert d'oxygène de plus de 190 mL/min.m$^2$ et une vitesse de transfert de gaz carbonique de plus de 2200 mL/min.m$^2$, vitesses mesurées dans chaque cas avec de l'eau thermostatée à 24 °C en tant que liquide absorbant ou liquide donneur.

10. Membrane conforme à l'une ou plusieurs des revendications 1 à 9, **caractérisée en ce qu'**elle présente un temps de transpercement par du plasma d'au moins 20 heures.

11. Membrane conforme à la revendication 10, **caractérisée en ce que** son temps de transpercement par du plasma vaut au moins 48 heures.

12. Membrane conforme à l'une ou plusieurs des revendications 1 à 11, **caractérisée en ce que** le polymère au nombre d'au moins un est une polyoléfine exclusivement constituée de carbone et d'hydrogène.

13. Membrane conforme à la revendication 12, **caractérisée en ce que** la polyoléfine est un poly(4-méthyl-pent-1-ène).

14. Membrane conforme à la revendication 12, **caractérisée en ce que** la polyoléfine est un polypropylène.

15. Membrane conforme à la revendication 12, **caractérisée en ce qu'**elle est essentiellement composée d'un mélange d'un polypropylène et d'un poly(4-méthyl-pent-1-ène).

16. Membrane conforme à l'une ou plusieurs des revendications 1 à 15, **caractérisée en ce qu'**il s'agit d'une membrane à fibres creuses.

17. Emploi d'une membrane conforme à l'une ou plusieurs des revendications 1 à 16 pour l'oxygénation de sang.

Fig. 1

Fig. 2

Fig. 3

Fig. 4

Fig. 5

Fig. 6

015701 5.0 kV 450nm

Fig. 7

015746 5.0 kV 1.00 μm

Fig. 8

015744 5.0 kV 2.00 μm

Fig. 9

Fig. 10

Fig. 11

Fig. 12

016413  5.0  kV                    450nm

Fig. 13

016416  5.0  kV                    2.00 µm

Fig. 14

016415  5.0  kV                    2.00 µm

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2833493 A
- DE 3205289 A
- EP 299381 A
- EP 285812 A
- DE 2737745 A
- EP 133882 A

**In der Beschreibung aufgeführte Nicht-Patentliteratur**

- **VON C.A. SMOLDERS ; J.J. VAN AARTSEN ; A. STEENBERGEN.** *Kolloid-Z. und Z. Polymere,* 1971, vol. 243, 14-20